# FASCICULE DE BREVET EUROPEEN

(11) **EP 3 983 271 B1**
(45) Date de publication et mention de la délivrance du brevet: **26.07.2023**
(21) Numéro de dépôt: 20734667.7
(22) Date de dépôt: 17.06.2020
(51) Int. Cl.: B60T 13/74, F16D 65/18

(54) **ACTIONNEUR DE SERRAGE À MAINTIEN PASSIF, FREIN DE STATIONNEMENT, VÉHICULE ET PROCÉDÉ D'UTILISATION**
PASSIVER HALTEKLEMMAKTUATOR, FESTSTELLBREMSE, FAHRZEUG UND VERWENDUNGSVERFAHREN
PASSIVE HOLDING CLAMPING ACTUATOR, PARKING BRAKE, VEHICLE AND METHOD OF USE

(30) Priorité: 17.06.2019 FR 1906474
(43) Date de publication de la demande: 20.04.2022
(73) Titulaire: Hitachi Astemo France, 93700 Drancy (FR)
(72) Inventeur: HURWIC, Aleksander, 75020 PARIS (FR); BOURLON, Philippe, 77230 DAMMARTIN EN GOELE (FR)
(74) Mandataire: IPAZ
(86) Numéro de dépôt international: PCT/EP2020/066822
(87) Numéro de publication internationale: WO 2020/254441

(56) Documents cités:
- WO-A1-97/36116
- US-A1- 2004 089 505

## Description

L'invention se rapporte à un actionneur motorisé de serrage à maintien passif, notamment pour un frein tout électrique réalisant frein de service et de stationnement pour un véhicule automobile.

L'actionneur comprend une transmission principale réversible et une transmission bloquante non réversible, entraînées en rotation pour déplacer en translation un piston de serrage, directement ou par l'intermédiaire d'une transmission commune entraînée en rotation par lesdites transmissions principale et bloquante. La transmission principale actionne typiquement le frein de service et le frein de stationnement, tandis que la transmission bloquante déplace son point d'irréversibilité dans le sens du serrage pour suivre le déplacement du piston, et maintenir le serrage lorsque le moteur de la transmission principale est désactivé. Le procédé propose d'utiliser ce blocage pour maintenir le frein de stationnement serré, ou pour maintenir le frein de service en cas de commande continue ou répétée.

### Etat de la technique

Dans un véhicule, en particulier routier, la fonction de frein de stationnement consiste à appliquer, et maintenir de façon prolongée, un serrage de patins de freins liés à une partie solidaire du châssis, sur une partie mobile en rotation qui est liée à une ou plusieurs roues, typiquement un disque ou un tambour. Ce frein de stationnement est souvent aussi prévu comme frein de secours.

Pour actionner un tel frein de façon électrique, il est connu d'utiliser un moteur électrique qui entraîne en rotation un mécanisme de transmission par coopération de dentures, pour fournir en sortie une translation linéaire, par exemple un mécanisme vis-écrou dont la sortie est immobilisée en rotation. Cette translation exerce ainsi un appui linéaire sur un piston de frein, qui vient serrer des garnitures contre une piste de frottement en rotation.

Dans une telle transmission, il est possible de régler différents paramètres qui vont faire que la transmission du mouvement entre l'entrée et la sortie se fasse de façon réversible ou non, par exemple en réglant l'angle de filetage pour un mécanisme vis-écrou.

En utilisant un angle, ou un pas, suffisamment faible, on réalise une transmission "bloquante" : elle produit un effort linéaire de serrage lorsqu'elle est entraînée en rotation par un moteur, et elle maintient ce serrage une fois que le moteur est désactivé du fait de son irréversibilité. Ce fonctionnement permet de réaliser un frein de stationnement, puisque aucune énergie n'est nécessaire pour maintenir ce serrage pendant une longue durée. Ce principe est appliqué par exemple dans le document FR2999257.

Cependant, une telle transmission irréversible présente en général un rendement énergétique médiocre du fait même de sa caractéristique de non-réversibilité. Il en découle différents inconvénients, comme par exemple une plus consommation d'énergie et un échauffement importants, et/ou une nécessité de prévoir une motorisation plus puissante, plus encombrante.

Un but de l'invention est de fournir un actionnement motorisé pour un tel frein, incluant un fonctionnement de stationnement par blocage passif, qui pallie en tout ou partie les inconvénients de l'art antérieur. Il est recherché en particulier une amélioration en matière d'efficacité énergétique, de compacité, d'échauffement, de simplicité, fiabilité et robustesse, mais aussi de souplesse de conception, fabrication et maintenance.

On connait du document US 2004/089505 et du document WO97/36116 d'autres modes de réalisation de dispositifs actionneurs, ou servomoteurs : le dispositif actionneur du document US 2004/089505 est conçu pour être mis en oeuvre dans un aéronef, tandis que celui décrit dans le document WO97/36116 est conçu pour être mis en oeuvre dans un véhicule automobile

### Présentation de l'invention

L'invention propose un dispositif d'actionneur, ou servomoteur, pour déplacer en translation un piston de serrage selon un axe de piston, lequel piston réalise ainsi un appui linéaire, notamment un piston de frein réalisant un appui de serrage d'au moins une garniture de friction sur une piste de frottement.

Ce dispositif est du type comprenant ou recevant un premier entraînement et un deuxième entraînement, dans lequel le deuxième entraînement est rotatif et est mû par un deuxième moteur, et déplace ledit piston en translation par au moins une transmission dite bloquante.

Cette transmission bloquante inclut au moins deux dentures, inclinées ou non, pouvant être par exemple un filetage multi-tours ou des dents de pignon, qui coopèrent ensemble de façon irréversible pour, directement ou indirectement :
- entraîner en translation ledit piston dans le sens du serrage lors d'une activation dudit deuxième moteur, et
- bloquer en translation ledit piston en position de serrage lorsque ledit deuxième moteur est désactivé, dans le seul sens du desserrage ou dans les deux sens.

Cette coopération peut se faire par appui direct, comme par exemple un filetage mâle engrenant dans un filetage femelle pour réaliser un mécanisme vis-écrou. Elle peut aussi se faire par éléments roulants intermédiaires, par exemple un mécanisme vis-écrou à billes, c'est à dire coopérant par l'intermédiaire de billes qui roulent dans des chemins de roulement hélicoïdaux faisant office de filetages, et qui sont recyclées par un circuit fermé de recirculation.

Cette caractéristique d'irréversibilité signifie qu'un effort en entrée pourra provoquer un déplacement en sortie, tandis qu'un effort appliqué en sortie ne pourra pas provoquer de déplacement en entrée, par simple blocage du mécanisme de transmission, même si la transmission ne reçoit en entrée aucun effort d'entraînement ou de résistance. Elle peut être obtenue de différentes façons, y compris de façon connue. Elle peut être obtenue par exemple en choisissant un angle d'inclinaison du filetage ou des dents qui est suffisamment faible pour être inférieur à l'angle de frottement déterminé par les couples de matériaux en contact, et/ou déterminé par la géométrie de la denture.

Selon l'invention, le premier entraînement est rotatif et est mû par un premier moteur ou motoréducteur, électrique, de préférence monté sur ledit actionneur. Typiquement, ce premier moteur est distinct du moteur du deuxième entraînement.

Le dispositif comprend alors en outre une transmission dite principale, qui reçoit le premier entraînement rotatif et qui inclut au moins deux dentures inclinées coopérant ensemble de façon réversible (directement ou par éléments roulants intermédiaires) pour réaliser, directement ou indirectement, un entraînement en translation dudit piston dans le sens du serrage lors d'une activation dudit premier moteur,

En outre, ladite transmission principale est agencée pour fonctionner en parallèle avec la transmission bloquante, et est agencée pour être capable à elle seule d'appliquer sur le piston un effort de serrage dit nominal.

Chaque moteur peut être un motoréducteur, notamment électrique.

Comme on le comprend, le piston de serrage peut ainsi être actionné de façon efficiente par la transmission principale, quel que soit le motif de cet actionnement, avec un bon rendement énergétique tel que le permet une transmission réversible ; tandis que la transmission bloquante permet d'obtenir un maintien passif du serrage obtenu par la transmission principale.

L'actionneur est agencé pour permettre, après avoir réalisé une mise en appui sous un effort de serrage en activant au moins la transmission principale, de maintenir ledit effort de serrage par l'irréversibilité de la transmission bloquante tout en désactivant ladite transmission principale. C'est-à-dire que l'agencement respectif de ces deux transmissions au sein de l'actionneur ne permet pas au piston de reculer tant que la transmission bloquante n'est pas activée dans le sens du desserrage.

En particulier, la transmission bloquante exerce son effort sur le piston en prenant appui sur une butée axiale (contre le boîtier de l'actionneur ou d'un dispositif qui l'inclut) par une chaîne d'appui, dite bloquante, qui ne passe pas par la partie réversible de la transmission principale. De préférence, cette chaîne d'appui bloquante ne passe pas par la sortie de la transmission principale, voire par aucune des pièces de ladite transmission principale. De préférence aussi, la transmission principale exerce son effort sur le piston en prenant appui sur une butée axiale (contre le boîtier de l'actionneur ou d'un dispositif qui l'inclut) par une chaîne d'appui, dite principale, qui ne passe pas par la transmission bloquante, voire qui ne passe pas par la sortie de ladite transmission bloquante.

Dans de nombreux actionneurs, dans la chaîne d'appui globale existant entre le boîtier et le piston de serrage, il est prévu au moins un élément élastique qui emmagasine une énergie mécanique par compression lors du serrage. Dans ce cas, l'invention prévoit de préférence que ledit élément élastique est prévu dans une partie de ladite chaîne d'appui globale qui est commune à la chaîne d'appui bloquante et à la chaîne d'appui principale. En particulier, il n'est prévu aucun élément élastique dans la partie de la chaîne d'appui bloquante qui n'est pas commune avec la chaîne d'appui principale.

L'actionnement se fait ainsi avec une faible consommation, et nécessite un moteur moins puissant que si l'effort d'actionnement devait être transmis par une transmission irréversible.

De son côté, même si la transmission bloquante représente un mécanisme et un moteur supplémentaire, elle se contente le plus souvent de suivre ou rejoindre le mouvement produit la transmission principale. Elle ne nécessite donc qu'un très faible effort. Cette combinaison permet ainsi de limiter le besoin de puissance du moteur principal et de diminuer sa consommation, tout en se contentant d'un moteur secondaire nettement moins puissant pour la transmission bloquante.

L'invention est particulièrement adaptée à l'actionnement d'un piston de frein, en particulier au sein d'un frein de véhicule, par exemple un véhicule routier et notamment un véhicule routier motorisé. Elle y apporte des avantages en matière d'efficacité énergétique, de compacité et de masse embarquée non suspendue, avec une sécurité de fonctionnement et de maintien, qui sont des domaines particulièrement important pour les véhicule, y compris pour les véhicules autonomes. Elle permet en particulier de réduire la consommation globale du véhicule et de limiter la sollicitation des pièces.

En particulier, elle permet de réaliser un frein au fonctionnement tout électrique, c'est-à-dire fonctionnement avec le même piston à la fois pour le frein de service et pour le frein de stationnement (aussi appelé frein de parking, et servant généralement aussi de frein de secours).

Typiquement, l'entraînement réalisé par la seule transmission bloquante est dimensionné de façon insuffisante pour obtenir à lui seul l'effort de serrage nominal, et en particulier l'effort recherché pour un serrage de stationnement.

L'effort de serrage nominal correspond alors par exemple à une valeur déterminée suffisante pour satisfaire aux nécessités d'une utilisation en frein de parking. La transmission principale est alors suffisante pour assurer l'effort de stationnement. La transmission bloquante ne sert alors qu'à suivre la transmission principale, et à encaisser le maintien en stationnement.

L'effort de serrage nominal peut aussi correspondre seulement à l'effort requis en freinage de service maximal. La motorisation de la transmission principale est alors dimensionnée pour fournir un effort qui est égal à l'effort requis pour le frein de service, ou un effort supérieur à celui du frein de service mais inférieur à celui requis pour le frein de stationnement. L'effort appliqué par la transmission bloquante vient alors en complément de celui produit appliqué par la transmission principale, pour obtenir l'effort requis en frein de stationnement. Même si ce complément présente une moindre efficacité énergétique, il est utilisé beaucoup moins souvent et permet de limiter le besoin de puissance du moteur de la transmission principale.

Cet effort de serrage nominal peut aussi correspondre à une valeur inférieure au freinage de service maximal, mais supérieure à une valeur déterminée qui n'est que rarement dépassée, par exemple une valeur maximale en utilisation normale. La transmission bloquante vient alors en complément lorsqu'un effort plus important est demandé, par exemple pour un freinage d'urgence ou pour un freinage de stationnement.

En outre, l'invention peut aussi être implémentée pour réaliser l'actionnement du seul frein de stationnement, par exemple pour un frein réalisant uniquement le frein de stationnement.

Elle peut aussi s'appliquer au frein de stationnement au sein d'un frein de service hydraulique, avec ou sans renfort hydraulique pour le serrage de stationnement.

Elle peut encore s'appliquer à un frein de service seul, par exemple pour économiser l'énergie en utilisant un blocage dans certaines conditions de freinage de service, par exemple lors d'un freinage maintenu au-delà d'une durée déterminée, ou répété à une fréquence élevée ou de façon prolongée.

En particulier, par exemple pour un frein tout électrique de service et stationnement, il est proposé un rapport de puissance entre le premier moteur et le deuxième de moteur qui est supérieur à 3 voire supérieur à 5, et inférieur à 500 voire inférieur à 100, et par exemple d'une valeur de 8, ou 10, ou 20.

Typiquement, le ou les moteurs sont des moteurs électriques qui sont fixés et montés sur le boîtier de frein, par exemple sur le boîtier d'étrier pour un frein à disque ou sur le plateau pour un frein à tambour.

L'invention est ici principalement exposée et illustrée dans des applications de frein de véhicule et en particulier un frein à disque. Un tel actionneur peut cependant être aussi utilisé dans d'autres types de freins de véhicule tels que des freins à tambour.

Elle peut aussi être utilisée pour actionner des freins dans d'autres domaines, par exemple un frein d'éolienne ou pour réaliser un freinage d'urgence ou de maintien d'un ascenseur sur ses rails de guidage.

En outre, on notera aussi que l'invention peut être avantageusement utilisée dans d'autres applications que celles d'un frein, pour réaliser une motorisation électrique d'un actionneur linéaire à effort important, en particulier mais non exclusivement avec une fonction de blocage sous effort. Il peut s'agir par exemple de réaliser un étau motorisé, ou un vérin électrique de levage ou de manutention.

De préférence, la transmission principale est motorisée et agencée pour être capable d'appliquer à elle seule sur le piston un effort de serrage nominal correspondant à l'effort acquis lors de la production d'un effort maximal de serrage pour lequel le dispositif est prévu.

Selon une particularité, la transmission bloquante entraîne le piston en translation par l'intermédiaire d'au moins un élément dit de maintien, lequel exerce sur le piston un effort en translation dans le sens du serrage et non dans le sens du desserrage, de façon à autoriser un déplacement du piston dans le sens du serrage sous l'effet de la transmission principale même en l'absence d'effort de translation de la part de ladite transmission bloquante.

Il est ainsi possible au véhicule de ne pas utiliser la transmission bloquante lors d'un freinage de service courant.

Cela permet en outre d'éviter que le freinage de service ne soit empêché par la transmission bloquante dans un cas où cette dernière serait défaillante.

Chacune des transmissions principale et bloquante peut être réalisée de différentes façons, avec ou sans réduction de vitesse, et les différents types de transmission de l'une peuvent être combinés avec les différents types de transmission de l'autre.

En particulier, la transmission réversible et/ou la transmission bloquante comprend un mécanisme de type vis-écrou, dans un sens ou dans l'autre, à contact direct ou à éléments roulants.

Selon une particularité, la transmission bloquante (et possiblement aussi la transmission principale) comprend une transmission par engrenage entre deux dentures rotatives d'axes transverses entre eux, c'est-à-dire non parallèles et notamment plus de 40° voire plus de 70°, en particulier perpendiculaires. Elle peut être par exemple à axes concourants ou à axes non concourants. Elle peut être par exemple à engrenage conique ou engrenage gauche, comprendre un engrenage de pignons à dentures hélicoïdales ou hypoïdes. Elle peut aussi utiliser une vis sur pignon à denture droite ou hélicoïdale à moins de 45°,

Selon une autre particularité, la transmission principale et/ou la transmission bloquante comprend une transmission réalisant une réduction de vitesse par engrenage entre une denture rotative et une crémaillère en translation, par exemple une vis sans fin sur crémaillère, notamment d'axes parallèles entre eux.

Selon différentes particularités pouvant être combinées entre elles, la caractéristique d'irréversibilité de la transmission bloquante et/ou de réversibilité de la transmission principale est obtenue par une combinaison d'une ou plusieurs caractéristiques parmi :
- angles de dentures engrenant ensemble, déterminé par rapport à un angle limite de frottement,
- couple de matériaux de surface ou de traitement de surface de dentures engrenant ensemble, déterminé par rapport à un angle limite de frottement, par exemple par choix de matériaux ou par traitement de surface ou par revêtement de surface
- paramètres de géométrie de denture et/ou d'engrenage, incluant profil et/ou déport et/ou adaptation et/ou entraxe, de dentures engrenant ensemble.

Selon une particularité :
- la transmission principale entraîne le piston en translation selon une première chaîne cinématique agencée présentant un premier jeu, par exemple pouvant être nul, et
- la transmission bloquante entraîne le piston en translation selon une deuxième chaîne cinématique agencée pour présenter un deuxième jeu, qui est non nul et supérieur audit premier jeu.

On obtient ainsi un retard dans l'application d'un effort par la transmission bloquante, par rapport à la transmission principale. Cela permet par exemple d'éviter que le deuxième moteur ne soit bloqué pendant un instant si la première transmission ne démarre pas suffisamment vite pour entraîner le déplacement du piston.

Alternativement ou en combinaison, le deuxième moteur est électrique et agencé pour supporter sans dommage, pendant une durée déterminée ou permanente, un courant d'alimentation résultant d'une activation dudit deuxième moteur dans un cas où sa rotation est ralentie ou bloquée par une résistance mécanique.

Pour cela, le deuxième moteur est par exemple dimensionné de façon spécifique, par exemple d'un type appelé "heavy duty" réalisé souvent à l'aide de conducteurs surdimensionnés, ou surdimensionné dans son refroidissement de façon active ou passive, ou alimenté par un circuit électrique présentant une protection contre les surintensités, notamment une protection électronique.

On limite ainsi les risques d'endommagement du deuxième moteur en cas d'absence de mouvement/force contre-électromotrice, notamment dans le cas d'une défaillance ou d'un retard du premier moteur, conduisant à un blocage mécanique du deuxième moteur lorsque ce dernier n'est pas assez puissant pour déplacer le piston à lui seul.

Selon une particularité, l'actionneur comprend un circuit d'alimentation , dit directe, agencé de sorte que le premier moteur et le deuxième moteur sont alimentés par un même circuit, ou par des circuits commandés par un même interrupteur ou de façon synchrone.

Cette particularité est particulièrement intéressante en combinaison avec les particularités de protection du deuxième moteur, telles que le jeu dans la chaîne de transmission bloquante et/ou la protection ou le surdimensionnement du deuxième moteur.

On obtient ainsi une simplicité intéressante et source de robustesse.

Alternativement ou en combinaison, le dispositif comprend un circuit d'alimentation dit décalée agencé pour, lors d'une commande d'activation simultanée du premier moteur et du deuxième moteur, le deuxième moteur est activé avec un retard non nul après le premier moteur.

De préférence, la transmission bloquante présente une partie de manoeuvre qui est agencée pour :
- recevoir un entraînement rotatif extérieur audit dispositif de façon à entraîner ladite transmission bloquante dans le sens du desserrage, et/ou
- être manoeuvrée de façon manuelle ou par un outil portatif de façon à désengager ladite transmission bloquante et ainsi autoriser le déplacement du piston dans le sens du desserrage.

### Première famille de modes de réalisation

Dans une première famille de modes de réalisation de l'invention, la transmission principale et la transmission bloquante sont toutes deux agencées pour recevoir un entraînement rotatif et produire un effort en translation.

Selon un mode de réalisation préféré, le piston est bloqué en rotation et est agencé pour pouvoir être entraîné en translation :
- par un effort linéaire issu d'un premier mécanisme vis-écrou formant ou participant à la transmission principale et agissant sur la périphérie extérieure dudit piston, et
- par un effort linéaire issu d'un deuxième mécanisme vis-écrou, formant ou participant à la transmission bloquante, et disposé à l'intérieur d'un logement ménagé à l'intérieur du piston et débouchant axialement pour recevoir le deuxième mécanisme vis-écrou.

De préférence, le premier mécanisme vis-écrou est du type à transmission par roulement, typiquement par éléments roulants comme une vis à recirculation de billes ; tandis que le deuxième mécanisme vis-écrou est du type à contact direct entre dentures solidaires de leurs éléments respectifs.

### Deuxième famille de modes de réalisation

Dans une deuxième famille de modes de réalisation de l'invention, la transmission principale et la transmission bloquante sont toutes deux agencées pour recevoir un entraînement rotatif et produire un effort en translation.

Dans une deuxième famille de modes de réalisation de l'invention, la transmission principale et la transmission bloquante sont toutes deux agencées pour recevoir un entraînement rotatif et produire un effort en rotation appliqué à un ou plusieurs éléments intermédiaires rotatifs, lesquels entraînent le piston en translation par une transmission dite commune, qui fonctionne de manière réversible.

Typiquement, il s'agit d'un même élément intermédiaire, entraîné en rotation sélectivement par la transmission principale et par la transmission bloquante, et qui entraîne le piston par l'intermédiaire d'une transmission à vis-écrou réversible, de préférence par roulement de billes à recirculation.

Selon une particularité, ce dispositif comprend :
- un mécanisme d'engrenages à axes parallèles, par exemple de type à engrenage extérieur ou de type épicycloïdal, formant ou participant à la transmission principale et qui entraîne un élément rotatif intermédiaire ;
- un mécanisme comprenant une denture menante d'axe transverse à l'axe du piston, engrenant sur un pignon d'axe parallèle à l'axe de piston et formant ou participant à la transmission bloquante et qui entraîne un élément rotatif intermédiaire, notamment un mécanisme vis-pignon ou un engrenage de pignons en renvoi d'angle ; et
- un mécanisme vis-écrou coaxial au piston, interne ou externe, formant la transmission commune qui est entraînée par le ou les éléments rotatifs intermédiaires.

Selon une autre particularité, le dispositif comprend :
- un mécanisme comprenant une denture menante d'axe transverse à l'axe du piston, engrenant sur un pignon d'axe parallèle à l'axe de piston et formant ou participant à la transmission principale et qui entraîne un élément rotatif intermédiaire, notamment un mécanisme vis-pignon ou un engrenage de pignons en renvoi d'angle ; et
- un mécanisme comprenant une denture menante d'axe transverse à l'axe du piston, engrenant sur un pignon d'axe parallèle à l'axe de piston et formant ou participant à la transmission bloquante et qui entraîne un élément rotatif intermédiaire, notamment un mécanisme vis-pignon ou un engrenage de pignons en renvoi d'angle ; et
- un mécanisme vis-écrou coaxial au piston, interne ou externe, formant la transmission commune, qui est entraîné par le ou les éléments rotatifs intermédiaires (215', 225').

Plus particulièrement, la denture menante de la transmission principale et la denture menante de la transmission bloquante engrènent alors toutes deux sur un même élément intermédiaire rotatif. Par exemple, sur une même denture menée, les dentures menantes sont agencées de façon différentes l'une de l'autre, dans leur profil et/ou leur matériau et/ou leur adaptation de denture, pour fonctionner de façon réversible pour l'une et respectivement irréversible pour l'autre tout en engrenant sur un même élément mené.

L'invention propose en outre Frein de véhicule comprenant un dispositif d'actionneur tel qu'exposé ici, qui est agencé pour actionner ledit frein dans une fonction de frein de stationnement ou de maintien de freinage, en utilisant la transmission principale pour fournir un effort de serrage de stationnement ;
et en utilisant la transmission bloquante pour maintenir ledit serrage en l'absence d'alimentation électrique, et pour desserrer ledit serrage par alimentation du deuxième moteur dans le sens du desserrage, et de préférence aussi du premier moteur.

En particulier, pour un serrage de stationnement, la transmission bloquante n'a pas besoin d'être activée avant la transmission principale. Elle n'est activée que pendant et/ou après l'activation de la transmission principale, et avant la désactivation de cette transmission principale.

Une fois le serrage de stationnement obtenu, la transmission bloquante suffit à elle seule pour maintenir ce serrage de stationnement en l'absence d'alimentation électrique, et donc une fois que le premier moteur de la transmission principale est désactivé.

Il est ainsi possible de conserver un serrage pendant une durée indéterminée et sans aucune énergie électrique.

Selon une particularité d'un tel frein, une fonction de freinage de service est réalisée en utilisant la transmission principale, par alimentation électrique du premier moteur de l'actionneur. Plus particulièrement, la transmission principale fournit la totalité de l'effort de freinage de stationnement, avec ou sans suivi de la transmission bloquante.

En particulier, il est ainsi proposé un frein à disque réunissant les fonctions de freinage de service et de stationnement et d'urgence qui sont toutes assurées de façon entièrement électrique par un tel actionneur.

Un tel frein est particulièrement intéressant pour simplifier la structure et la conception d'un véhicule, en particulier pour le doter de fonctions d'assistance automatisée, et en particulier pour un véhicule commandé à distance ou entièrement autonome.

L'invention propose en outre un véhicule motorisé ou non motorisé, notamment routier, comprenant au moins un frein ou un actionneur de frein tel qu'exposé ici.

Selon un autre aspect, l'invention propose un procédé de commande d'un frein tel qu'exposé ici, ou d'un frein actionné par un actionneur tel qu'exposé ici. Selon l'invention, ce procédé réalise au moins une fonction de frein de stationnement en mettant en oeuvre les étapes suivantes :
- à réception d'une commande de serrage du frein de stationnement, alimentation du premier moteur et du deuxième moteur jusqu'à obtention d'un effort de serrage demandé, déterminé pour satisfaire à une mise en oeuvre en frein de stationnement ;
- désactivation du premier moteur et du deuxième moteur ;
- sans alimentation électrique, maintien d'un effort de serrage de consigne, inférieur ou égal à l'effort de serrage demandé et déterminé pour satisfaire à un maintien de frein de stationnement, par réaction de la transmission bloquante ;
- à réception d'une commande de desserrage du frein de stationnement, alimentation du deuxième moteur dans le sens du desserrage, et optionnellement du premier moteur.

On obtient ainsi un freinage de stationnement à fonctionnement purement électrique, de façon fiable et prolongée et avec une consommation réduite, y compris pour un freinage purement électrique.

Selon une particularité, ce procédé réalise en outre une fonction de maintien de freinage, notamment à l'arrêt ou en situation de freinage constant, en mettant en oeuvre les étapes suivantes :
- à réception d'une commande de freinage de service, alimentation au moins du premier moteur pour fournir un effort de serrage à une valeur de consigne ;
- détection d'une commande de consigne de freinage de service maintenue, pendant une durée supérieure à une valeur déterminée, à une valeur constante, ou invariante dans une plage déterminée, ou supérieure à une valeur déterminée ;
- désactivation du premier moteur et optionnellement du deuxième moteur ;
- sans alimentation électrique, maintien d'un effort de serrage d'une valeur sensiblement égale à la valeur de consigne maintenue, par réaction de la transmission bloquante ;
- à réception d'une commande de desserrage du frein de service, alimentation du deuxième moteur, et optionnellement du premier moteur, dans le sens du desserrage.

Il est ainsi possible de réduire la consommation électrique en cours de circulation, par exemple lorsque le frein de service est maintenu pendant longtemps activé, par exemple pour un arrêt temporaire ou lors d'un freinage partiel mais prolongé tel que dans une descente.

Plus particulièrement, ce procédé est appliqué à un actionneur du type exposé ici et dont la transmission bloquante entraîne le piston en translation par l'intermédiaire d'au moins un élément dit de maintien, lequel exerce sur le piston un effort en translation dans le sens du serrage et non dans le sens du desserrage, de façon à autoriser un déplacement du piston dans le sens du serrage sous l'effet de la transmission principale même en l'absence d'effort de translation de la part de ladite transmission bloquante.

Selon cette particularité, à réception d'une commande de freinage de service, l'étape d'alimentation du premier moteur se fait en maintenant l'élément de maintien de la transmission bloquante en position desserrée. L'étape de désactivation du premier moteur, et du possiblement deuxième moteur, est alors précédée d'une étape d'activation dudit deuxième moteur pour amener ledit élément de maintien en position de serrage avec un effort correspondant à la valeur de consigne maintenue.

Il est ainsi possible au véhicule de ne pas utiliser la transmission bloquante lors d'un freinage de service courant, tout en gardant la possibilité de passer directement dans un mode de freinage maintenu ou de freinage de stationnement même lorsque le frein de service est déjà activé.

Encore selon un autre aspect, l'invention propose un procédé de fabrication d'un actionneur de frein tel qu'exposé ici. Ce procédé comprend les étapes suivantes :
- fabrication d'un élément de transmission dit de base, destiné à former une denture de transmission finie, menante ou menée, par coopération avec une denture de transmission dite complémentaire, au sein de la transmission principale ou de la transmission bloquante de l'actionneur (de préférence avec toutes les caractéristiques de montage et de guidage déjà réalisées) ;
- sélection d'une caractéristique de réversibilité ou non-réversibilité pour ladite denture de transmission finie ;
- en fonction de ladite sélection de caractéristique, sélection et application d'une ou plusieurs opérations de finition (notamment d'usinage de denture et/ou de traitement ou revêtement de surface) prévue pour obtenir ladite denture finie à partir dudit élément de base, ladite opération de finition étant déterminée pour que le couple formé par ladite denture finie et sa denture complémentaire coopèrent ensemble de façon réversible ou non selon ladite sélection de caractéristique.

Il est ainsi possible de mutualiser certaines étapes de fabrication, de limiter les stocks et simplifier l'approvisionnement, et de rendre plus souple l'organisation et l'ordonnancement des fabrications,

Encore selon un autre aspect, l'invention propose un procédé de fabrication de véhicule, comprenant un montage d'un ou plusieurs freins ou actionneurs de frein tels qu'exposé ici.

On notera que toutes les combinaisons de transmissions de différents types sont envisagées réaliser les transmissions principale et bloquante, et la transmission commune dans les modes de réalisation où elle existe. D'une manière générale, le choix d'une combinaison ou d'une autre peut permettre d'améliorer certaines caractéristiques, par exemple de compacité ou d'effort ou de simplicité ou souplesse de fabrication.

Les différents paramètres de conception ou de fabrication exposés ici, pour déterminer les propriété de réversibilité et de non-réversibilité, sont combinés entre eux et avec les différents types de transmission pour obtenir d'une part la réversibilité de la transmission principale avec une efficacité énergétique maximale, et d'autre part la non-réversibilité de la transmission bloquante.

Des modes de réalisation variés de l'invention sont prévus, intégrant selon l'ensemble de leurs combinaisons possibles les différentes caractéristiques optionnelles exposées ici.

### Brève description des dessins

D'autres particularités et avantages de l'invention ressortiront de la description détaillée d'un mode de mise en oeuvre nullement limitatif, et des dessins annexés sur lesquels :
[Fig.1] : la Fig.1 est un organigramme schématique, qui illustre les flux d'efforts au sein d'un frein selon l'invention ;
[Fig.2] : la Fig.2 est un organigramme schématique, qui illustre les flux d'efforts au sein d'un frein selon une première famille de modes de réalisation, où la transmission bloquante et la transmission principale produisent toutes deux une translation ;
[Fig.3] : la Fig.3 est un schéma cinématique compatible avec la Fig.2, qui illustre le fonctionnement de l'invention dans un exemple de mode de réalisation de l'invention ;
[Fig.4] : la Fig.4 est une vue schématique en coupe longitudinale qui illustre un agencement de l'actionneur avec la cinématique de la Fig.3, dans un exemple de mode de réalisation de l'invention avec transmission bloquante interne au piston de frein et transmission principale autour du piston ;
[Fig.5] : les Fig.5a et Fig.5b sont des vues schématiques en coupe longitudinale qui illustrent un agencement de l'actionneur avec la cinématique de la Fig.3, dans un exemple de mode de réalisation de l'invention avec transmission principale autour du piston de frein et transmission bloquante interne au piston de frein et non bloquante au serrage, en position :
   - Fig.5a : au repos,
   - Fig.5b : de serrage sans action de la transmission bloquante ;
[Fig.6] : les Fig.6a et Fig.6b sont des vues schématiques en coupe longitudinale qui illustrent le fonctionnement de l'actionneur de la Fig.5, en position :
   - Fig.6a : en cours de serrage actif avec la transmission bloquante, et
   - Fig.6b : de serrage passif après le serrage de la Fig.6a ;
[Fig.7] : la Fig.7 est une vue schématique en coupe longitudinale qui illustre un agencement de l'actionneur avec la cinématique de la Fig.3, dans un autre exemple de mode de réalisation de l'invention avec transmission principale autour du piston de frein et transmission bloquante interne au piston de frein et non bloquante au serrage, en position au repos ;
[Fig.8] : les Fig.8a et Fig.8b sont des schémas cinématiques compatibles avec la Fig.2, qui illustrent deux autres exemples de modes de réalisation de l'invention ;
[Fig.9] : la Fig.9 est un organigramme schématique, qui illustre les flux d'efforts au sein d'un frein selon une deuxième famille de modes de réalisation, où la transmission bloquante et la transmission principale produisent toutes deux une rotation ;
[Fig.10] : les Fig.10a à Fig.10c sont des schémas cinématiques compatibles avec la Fig.9, qui illustrent plusieurs exemples de modes de réalisation de l'invention de cette deuxième famille ;
[Fig.11] : les Fig.11a à Fig.11c sont des schémas cinématiques qui illustrent plus en détail des exemples de modes de réalisation :
   - Fig.11a : compatible avec la Fig.10a, avec transmission principale à motoréducteur axial et transmission bloquante à pignon entraîné par vis sans fin,
   - Fig.11b : compatible avec la Fig.10a, avec transmission principale à entraînement axial classique et transmission bloquante à pignon entraîné par vis sans fin ;
   - Fig.11c : compatible avec la Fig.10b, avec transmission principale à entraînement axial classique et transmission bloquante à pignon entraîné par vis sans fin ;
[Fig.12] : les Fig.12a et Fig.12b sont des schémas cinématiques qui illustrent plus en détail des exemples de modes de réalisation compatibles avec la Fig.10a :
   - Fig.12a : avec transmission principale et transmission bloquante à deux pignons entraînés chacun par une vis sans fin,
   - Fig. 12b : avec transmission principale et transmission bloquante à deux vis sans fin entraînant toutes deux un même pignon ;
[Fig.13] : les Fig.13a à Fig.13b sont deux schémas cinématiques et une vue en perspective qui illustrent plus en détail des exemples de modes de réalisation compatibles avec la Fig.10a :
   - Fig.13a : avec transmission principale et transmission bloquante à deux pignons à renvoi d'angle entraînant tous deux un même pignon à renvoi d'angle ;
   - Fig. 13b : avec transmission principale et transmission bloquante réalisées chacune par un couple de pignons à renvoi d'angle ;
   - Fig.13c : exemple de pignons à renvoi d'angle utilisables pour les transmissions des Fig.13a et Fig.13b, ici de forme trapézoïdale et denture hélicoïdale ;
[Fig.14] : la Fig.14 est une vue simplifiée en coupe longitudinale qui illustre un exemple de mode de réalisation de l'invention de la première famille, compatible avec l'exemple des Fig.5 et Fig.6 et appliqué à un frein à disque tout électrique ;
[Fig.15] : la Fig.15 est une vue simplifiée en coupe longitudinale qui illustre un exemple de mode de réalisation de l'invention de la deuxième famille, compatible avec l'exemple de la Fig.11a, et appliqué à un frein à disque tout électrique ;
[Fig.16] : la Fig.16 est une vue simplifiée en coupe longitudinale qui illustre un exemple de mode de réalisation de l'invention de la deuxième famille, compatible avec l'exemple de la Fig.12b, et appliqué à un frein à disque tout électrique.

### Description des modes de réalisation

Les exemples décrits ici portent sur une application de l'invention à l'actionnement d'un frein de véhicule automobile, typiquement une automobile ou un véhicule utilitaire léger ou lourd. Il est cependant prévu d'implémenter ces différents exemples de fonctionnements et caractéristiques à de nombreuses autres applications.

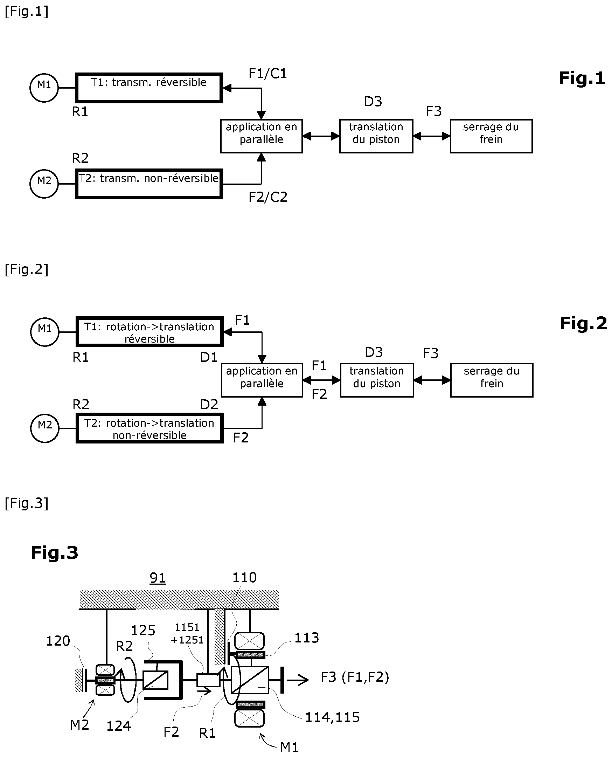

La Fig.1 illustre le principe des flux d'efforts au sein d'un actionneur selon l'invention, ici appliqué au serrage d'un piston de frein.

La transmission principale T1 est entraînée en rotation R1 par le moteur électrique M1. Lorsqu'elle est activée, elle fournit un couple C1 qui entraîne le piston de façon réversible, selon un effort F1 en translation D3, pour produire ainsi un serrage du frein.

La transmission bloquante T2 est entraînée en rotation R2 par le moteur électrique M2. Lorsqu'elle est activée, elle fournit un couple C2 qui entraîne le piston de façon irréversible selon un effort F2 en translation D3. Selon les modes de réalisation ou les modes d'utilisation, cet effort F2 est suffisant pour déplacer son propre point d'irréversibilité et suivre le déplacement fourni par la transmission principale T1, laquelle fournit alors la totalité de l'effort F3 de serrage. L'effort F2 de la transmission bloquante peut aussi être prévu pour compléter cet effort F1 pour produire un effort de serrage total F3 qui découle alors de la somme des efforts F1 et F2.

Dans le cas où il est prévu au moins un élément élastique qui emmagasine une énergie mécanique par compression lors du serrage, cet élément élastique sera de préférence inséré dans la branche commune (D3, F3), c'est-à-dire la branche entre le cadre "application en parallèle" et jusqu'au cadre "serrage du frein" inclus. En particulier la branche uniquement "bloquante" (R2, F2, C2) située entre le deuxième moteur M2 et le cadre "application parallèle" ne contient aucun élément élastique.

### Première famille de modes de réalisation

La Fig.2 illustre les flux d'efforts au sein d'un frein selon la première famille de modes de réalisation, dans laquelle la transmission principale T1 et la transmission bloquante T2 sont toutes deux agencées pour recevoir un entraînement rotatif M1, M2 et produire un effort F1, F2 en translation D3.

La Fig.3 illustre le fonctionnement de l'invention dans un exemple de mode de réalisation de l'invention de cette première famille. Dans cet exemple, la transmission principale T1 est entraînée par le moteur M1, en rotation R1 par rapport au boîtier ou bâti 91. Elle comprend en entrée un écrou 113 coopérant intérieurement avec une vis 114, laquelle est immobilisée en rotation par une butée rotative 1151. L'écrou 113 s'appuie sur une butée axiale 110 et déplace donc la vis 114 en translation pour produire un appui linéaire F1, ici appliqué sur une garniture de friction.

La transmission bloquante T2 est entraînée par le moteur M2, en rotation R2 par rapport au boîtier ou bâti 91. Elle comprend en entrée une vis 124 coopérant extérieurement avec un écrou 125, lequel est immobilisé en rotation par une butée rotative 1251. La vis 124 s'appuie sur une butée axiale 120 et déplace donc cet écrou 125 en translation pour produire un effort linéaire F2, qui s'applique sur la partie mobile en translation de la translation principale, ici la vis 114.

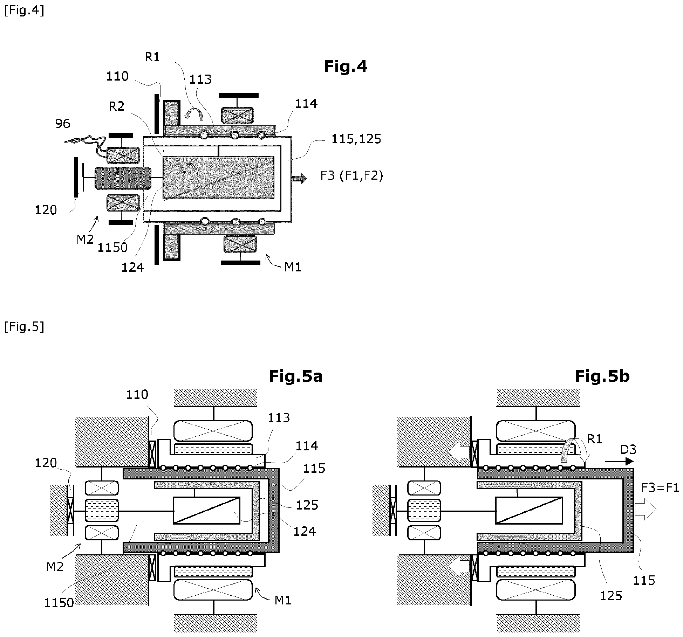

La Fig.4 illustre plus en détail un exemple d'agencement d'un tel actionneur, avec une transmission bloquante T2 qui est interne au piston de frein, lequel est entouré extérieurement par la transmission principale T1. Le piston 115 est bloqué en rotation 1151, 1251 par rapport au boîtier 91.

Par activation du premier moteur M1, le piston 115 peut être entraîné en translation dans un sens ou dans l'autre, par un effort linéaire F1 issu d'un premier mécanisme vis-écrou 113, 114, 115 formant ou participant à la transmission principale T1. Ce mécanisme vis-écrou est ici réalisé par un mécanisme de roulement à recirculation de billes qui forme un filetage 114 agissant sur la périphérie extérieure dudit piston 115, laquelle forme ainsi la vis de sortie de la transmission principale T1, de façon intégrée ou en en étant solidaire au moins en déplacement axial.

Par activation du deuxième moteur M2, le piston 115 peut être entraîné en translation dans un sens ou dans l'autre, par un effort linéaire F2 issu d'un deuxième mécanisme vis-écrou 124, 125, formant ou participant à la transmission bloquante T2. Ce deuxième mécanisme vis-écrou est disposé à l'intérieur d'un logement 1150 ménagé à l'intérieur du piston 115.

Les Fig.5a et Fig.5b illustrent un exemple d'agencement de l'actionneur, dans une variante de la Fig.4 qui ne sera décrite que dans ses différences. Dans cette variante, la transmission bloquante T2 ne bloque la translation D3 que dans le sens du desserrage, et ne s'oppose pas au déplacement du piston 115 dans le sens du serrage même lorsqu'elle n'est pas activée.

Dans cette variante, la transmission bloquante présente en sortie un élément de maintien à sens unique, ici l'écrou 125, qui est distinct du piston 115. Cet écrou 125 forme un noyau qui coulisse en translation à l'intérieur du logement 1150 du piston 115 : de façon libre dans le sens du desserrage (vers la gauche sur la figure), et avec une butée axiale contre le piston 125 dans le sens du serrage (vers la droite sur la figure), formant ainsi un élément d'appui intermédiaire de la transmission bloquante T2 vers le piston 115.

La Fig.5a illustre l'actionneur au repos.

En Fig.5b, sous l'effet d'une commande d'actionnement du frein de service, le premier moteur M1 est activé et entraîne en rotation R1 l'écrou 113 de la transmission principale T1.

Dans cette exemple, en l'absence de commande du frein de stationnement, ou en cas de défaillance de la transmission bloquante ou de son entraînement, le deuxième moteur M2 n'est pas activé et la transmission bloquante T2 reste en position au repos, avec son écrou 125 en position desserrée, c'est-à-dire sur la gauche de la figure.

Du fait que l'écrou 125 peut coulisser librement dans le sens du desserrage à l'intérieur du piston 115, lequel peut ainsi se déplacer dans le sens du serrage même si la transmission bloquante reste en position au repos.

Dans la Fig.5b, on obtient ainsi un déplacement D3 du piston 115 dans le sens du serrage, c'est-à-dire vers le droite de la figure, qui applique ainsi sur la garniture de friction un effort de serrage F1 malgré l'immobilité de la transmission bloquante.

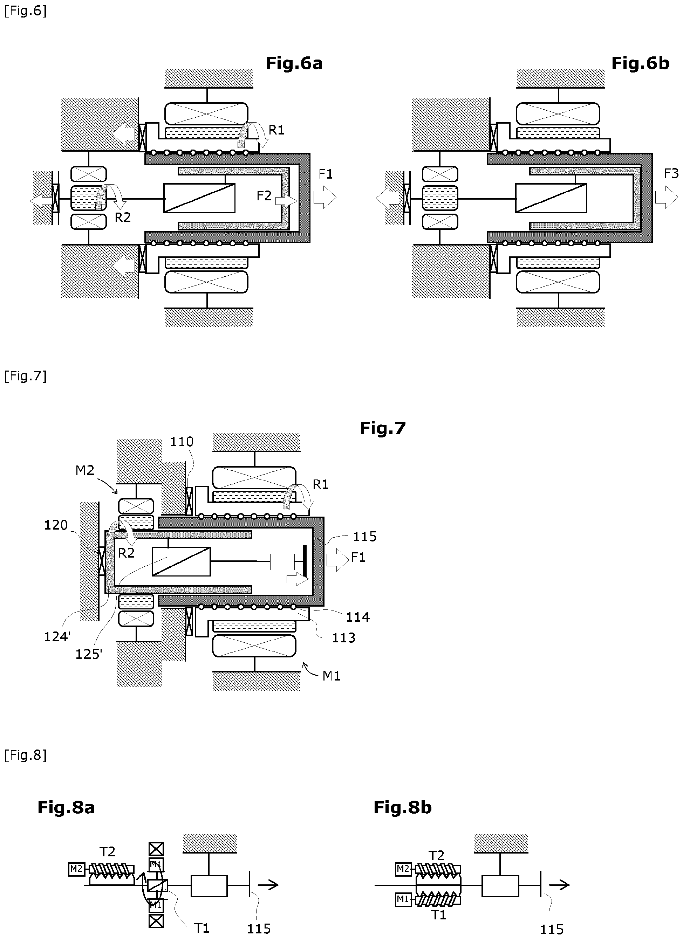

Les Fig.6a et Fig.6b illustrent le fonctionnement de l'actionneur de la Fig.5, dans un cycle d'utilisation du frein de stationnement, qui peut s'appliquer aussi à l'exemple de la Fig.4.

En Fig.6a, le premier moteur M1 et le deuxième moteur M2 sont activés tous les deux. Cette commande peut par exemple être mise en oeuvre depuis la position au repos complet comme en Fig.5a, mais aussi depuis une position de serrage par la seule transmission principale T1 comme en Fig.5b. L'effort de serrage F3 résulte ainsi de l'effort F1 appliqué par la transmission principale T1, et profite donc de son rendement énergétique élevé. La transmission bloquante T2 et son entraînement M2 se contentent de fournir un effort F2 faible, qui n'a besoin que de pouvoir déplacer l'élément d'appui intermédiaire 125 pour qu'il suive le piston 115.

En Fig.6b, après le serrage et blocage obtenu en Fig.6a, le premier moteur M1 est désactivé, par exemple lorsque l'utilisateur a quitté le véhicule en stationnement.

Du fait de la réversibilité de la transmission principale T1, elle n'est plus en mesure de maintenir l'effort de serrage F1, et donc de retenir le piston 115. Cependant, du fait de sa non-réversibilité, la transmission bloquante T2 empêche le piston 115 de revenir en arrière (ici par l'intermédiaire de l'élément d'appui intermédiaire 125). Elle conserve donc l'effort de serrage F3, en s'appuyant sur le bâti 91 par sa butée axiale 120, de façon purement passive et sans aucune consommation d'énergie, sans limite de durée.

Pour desserrer le frein, il suffit d'activer le deuxième moteur M2 dans le sens du desserrage, seul ou avec un soutien du premier moteur M1, et ainsi permettre au piston de se déplacer dans le sens du desserrage.

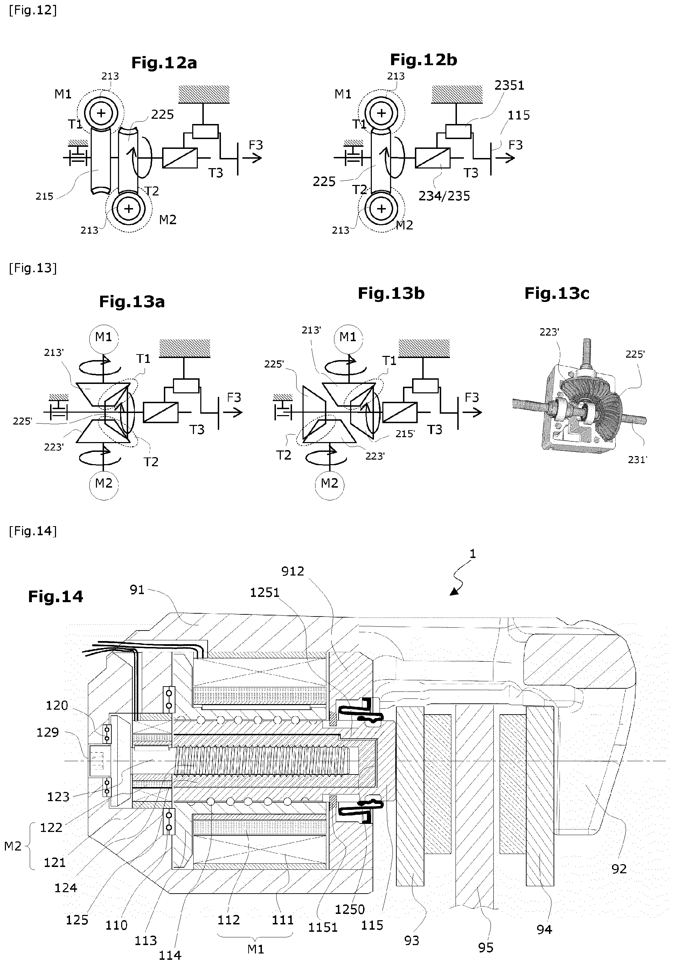

La Fig.14 illustre un exemple de mode de réalisation de l'invention de la première famille, compatible avec l'exemple des Fig.5 et Fig.6 et appliqué à un frein à disque tout électrique. Il ne sera décrit que dans ses différences.

Le frein 1 est un frein à disque, ici du type à étrier coulissant, comprenant un boîtier 91 qui contient l'actionneur dans un logement fermé par un couvercle 912. Le premier moteur comprend un stator 111 extérieur bobiné monté solidaire du boîtier 91, et un rotor intérieur 112 à aimants permanents. Le rotor est monté sur un manchon creux formant l'écrou 113 de la transmission principale, qui est muni d'un flasque prenant appui sur une butée axiale 110, ici à billes mais pouvant aussi être par exemple à rouleaux pour par couche de glissement tel que bronze ou PTFE.

Le premier mécanisme vis-écrou est du type à transmission par éléments roulants, ici par roulement et recirculation de billes 114. Sa vis est immobilisée en rotation par rapport au boîtier 91, ici et à titre de simple exemple par une butée rotative 1151 coulissant dans une rainure axiale. Cette vis forme ici le piston 115, qui vient serrer deux garnitures de friction 93, 94 sur les deux faces du disque 95 par opposition sur les deux branches du nez 92.

Le deuxième mécanisme vis-écrou est ici du type à contact direct, entre la vis d'entrée 124 et l'écrou 125. Cet écrou est immobilisé en rotation par rapport au boîtier 91, ici par l'intermédiaire du piston 115 au moyen d'une butée rotative, illustrée ici et à titre d'exemple par une rainure axiale 1251 recevant une nervure axiale du piston. L'écrou 125 présente à son extrémité une partie d'appui 1250 qui vient en butée au fond du logement du piston 115, l'écrou 125 formant ainsi l'élément d'appui intermédiaire.

La vis 124 de la transmission bloquante est portée par un arbre 123, solidaire du rotor 122 du deuxième moteur M2, ici du type à aimants permanents et entraîné par le rotor bobiné 121 solidaire du boîtier 91.

A son extrémité dite arrière, opposée au disque, l'arbre 123 d'entrée de la transmission bloquante vient en appui axial contre le boîtier 91, ici et à titre d'exemple par un flasque prenant appui sur une butée à bille 120, mais qui pourrait aussi être réalisée par des rouleaux ou une surface de glissement.

La Fig.7 illustre un autre exemple de mode de réalisation de l'invention d'agencement de l'actionneur, dans une variante de la Fig.5, au fonctionnement similaire et qui ne sera décrite que dans ses différences. Dans cette variante, la transmission bloquante comprend un écrou 124' menant qui est entraîné en rotation par le rotor du deuxième moteur M2.

Cet écrou 124' coopère avec une vis 125' intérieure, qui applique un appui axial au fond dudit piston et est bloquée en rotation par rapport au piston 115, par exemple de façon solidaire ou sous forme de butée axiale avec une liaison glissière pour jouer le rôle d'élément d'appui intermédiaire..

Les Fig.8a et Fig.8b sont des schémas cinématiques qui illustrent deux autres exemples de modes de réalisation de l'invention dans lesquels la transmission principale et/ou la transmission bloquante comprend une transmission réalisant une réduction de vitesse par engrenage entre une denture rotative et une crémaillère en translation.

En Fig.8a, la transmission principale T1 est formée par ou comprend un mécanisme vis-écrou à vis centrale qui déplace le piston 115 en translation. La transmission bloquante T2 est formée par ou comprend une vis sans fin, ici à axe parallèle à l'axe du piston, qui entraîne en translation de façon irréversible une crémaillère agissant en translation sur le piston.

En Fig.8b, la transmission principale T1 et la transmission bloquante T2 comprennent chacune une vis sans fin qui agissent toutes deux sur une crémaillère qui déplace le piston en translation, l'une T1 de façon réversible et l'autre T2 de façon irréversible.

### Deuxième famille de modes de réalisation

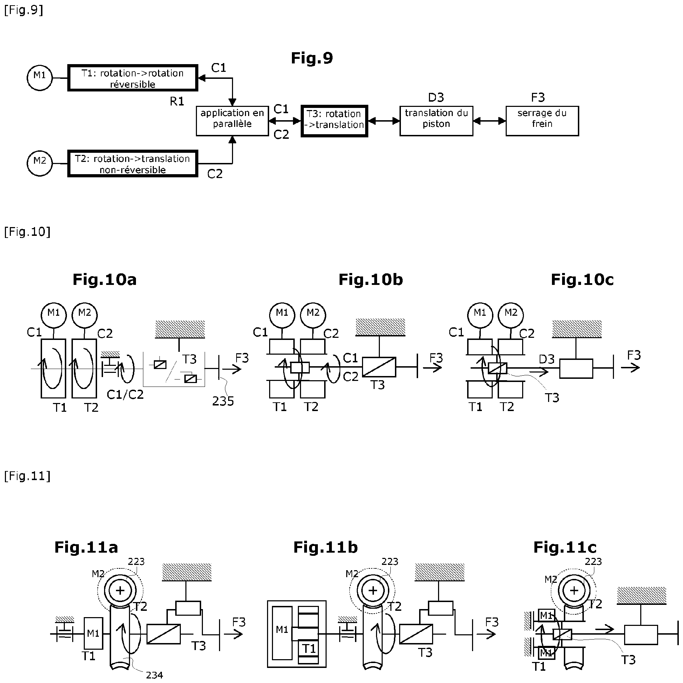

La Fig.9 illustre les flux d'efforts au sein d'un frein selon la deuxième famille de modes de réalisation, dans laquelle la transmission bloquante T2 et la transmission principale T1 sont toutes deux agencées pour recevoir un entraînement rotatif M1, M2 et produire un effort en rotation C1, C2, par exemple avec réduction de vitesse, appliqué à un ou plusieurs éléments intermédiaires rotatifs, lesquels entraînent le piston en translation D3 par une transmission dite commune T3, qui fonctionne de manière réversible.

La Fig.10a illustre un exemple de ce principe avec un même élément intermédiaire, qui entraîne le piston 235 par l'intermédiaire d'une transmission T3 à vis-écrou réversible, par exemple une vis à billes.

Dans l'exemple de la Fig.10b, les deux transmissions T1, T2 sont immobiles en translation et entraînent un même élément rotatif par une liaison glissière (par exemple des cannelures longitudinales) selon un couple C1 et/ou C2, lequel se déplace en translation F3 sous l'effet d'un mécanisme vis-écrou formant la transmission commune T3.

Dans l'exemple de la Fig.10c, les deux transmissions T1, T2 sont immobiles en translation et entraînent un même élément rotatif d'entrée d'un mécanisme vis-écrou, dont l'élément de sortie (ici la vis) se déplace en translation F3 grâce à une liaison glissière avec le boîtier.

La Fig.11a illustre une variante de la Fig.10a, dans laquelle un motoréducteur axial le moteur M1 entraîne un réducteur épicycloïdal formant la transmission principale T1.

L'exemple de la Fig.11b illustre un agencement du principe de la Fig.10a, avec une transmission principale T1 formée par un moteur M1 simple ou un motoréducteur qui entraîne directement la vis 234 la transmission commune T3. La transmission bloquante T2 est ici réalisée par un pignon 225' entraîné par une vis sans fin 223'.

L'exemple de la Fig.11c illustre un agencement du principe de la Fig.10b, avec transmission principale à entraînement axial classique et transmission bloquante à pignon entraîné par vis sans fin, entraînant toutes deux un même écrou de la transmission commune T3.

Les Fig.12a et Fig.12b illustrent plus en détail des exemples d'agencements du principe de la Fig.10a, dans lesquelles les deux transmissions principale T1 et bloquante T2 sont formées par entraînement d'une vis sans fin 213 et 223, sur deux pignons différents 223 et 225 pour la Fig.12a et sur un même pignon 225 pour la Fig.12b.

Les Fig.13a à Fig.13b sont deux schémas cinématiques et une vue en perspective qui illustrent plus en détail des exemples de modes de réalisation compatibles avec la Fig. 10a, dans lesquels les deux transmissions principale T1 et bloquante T2 sont formées par engrenages de pignons à axes transverses, par exemple coniques ou gauches.

En Fig.13a, elles comprennent toutes deux un pignon menant 213' et 223' qui engrènent sur un même pignon menant 225', lequel entraîne la transmission commune T3.

En Fig.13b, elles entraînent chacune un pignon mené différent 215' et 225', lesquels entraînent tous deux la transmission commune T3.

La Fig.13c illustre un exemple non limitatif de pignons à renvoi d'angle utilisables pour les transmissions des Fig.13a et Fig.13b, ici de forme trapézoïdale et denture hélicoïdale en formant un engrenage à axes perpendiculaires et concourants.

Dans tous les modes de réalisation utilisant une même denture menée pour recevoir la denture menante de la transmission principale T1 et celle de la transmission bloquante T2, chacune de ces dentures menantes est réalisée avec une géométrie qui est compatible avec la géométrie de la denture menée commune.

A l'intérieur de cette contrainte de compatibilité, on choisira des variations différentes des paramètres de fabrication pour obtenir des réversibilités différentes de la part des dentures menantes principale et bloquante sur une même denture menée.

Entre la denture menante principale et la denture menante bloquante, on pourra par exemple utiliser un matériau différent ou un traitement de surface différent, de façon à obtenir des couples de matériau différents et donc des coefficients de frottement différents donnant des réversibilités différentes, pour une même géométrie et un même pas ou angle d'hélice. En combinaison ou alternativement, on pourra aussi utiliser des adaptations différentes dans la géométrie des dentures menantes, par exemple de déport et/ou d'entraxe, pour obtenir des réversibilités différentes avec une même denture menée.

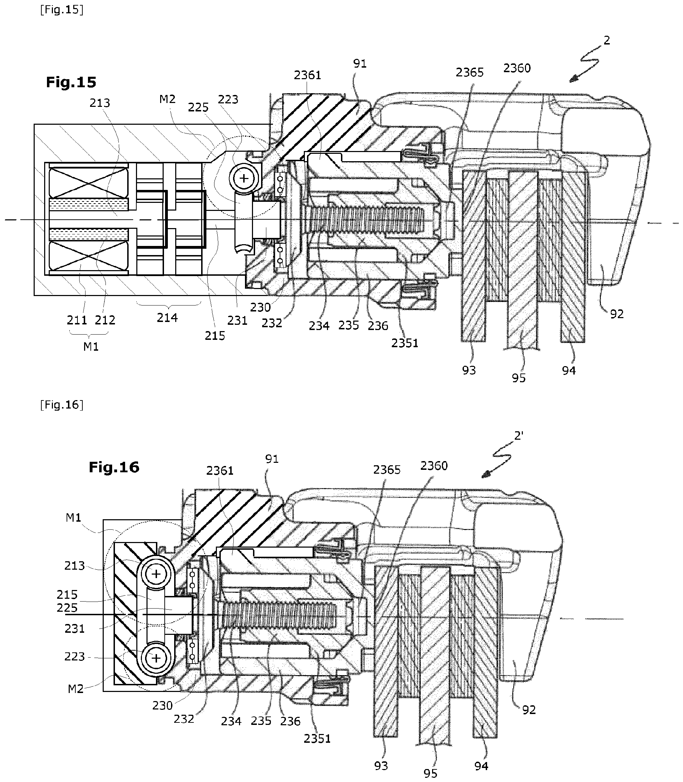

La Fig.15 illustre un exemple de mode de réalisation de l'invention de la deuxième famille, dont l'actionneur est compatible avec l'exemple de la Fig.11a et ne sera décrit que dans ses différences. Le frein 2 est un frein à disque, d'architecture similaire au frein 1 de la Fig.14 et qui ne sera décrit que dans ses différences.

Un bloc motoréducteur MR1 est monté par son boîtier 98 sur le boîtier 91 de l'étrier, dans l'axe du piston 236. Il comprend le premier moteur M1 formé par un premier stator extérieur bobiné 211 coopérant avec un premier rotor à aimants permanents 212. Ce moteur entraîne un réducteur axial 214, ici exemplifié sous la forme d'un double train épicycloïdal en série avec entrée planétaire, couronne fixe commune, et sorties par le porte-satellites. L'arbre de sortie 215 de ce motoréducteur entraîne en rotation un arbre intermédiaire 231 d'entrée de la transmission commune T3. Celle-ci est formée par une vis 234 menante qui coopère avec un écrou mené 235, ici sous la forme d'un noyau logé axialement à l'intérieur du piston 236 et qui vient appuyé axialement sur le fond dudit piston. Ce mécanisme vis-écrou 234, 235 est ici illustré sous la forme d'une coopération par contact direct, mais est envisagé aussi sous la forme d'un filetage à roulement tel que celui 114 de la transmission principale de la Fig. 14.

Le noyau 235 est immobilisé en rotation par coulissement 2351 dans une rainure à l'intérieur du piston 236, lequel est immobilisé en rotation par coulissement 2361 dans une rainure à l'intérieur du boîtier 91 de l'étrier.

Dans cette configuration, on notera que le noyau 235 et le piston 236 peuvent aussi être solidaires entre eux voire former une pièce unique.

L'arbre intermédiaire 231 est solidaire d'une flasque 232 qui répercute axialement l'effort de serrage F3 sur le boîtier 91, par l'intermédiaire d'une butée axiale, ici illustrée sous la forme d'une butée à bille.

La transmission bloquante T2 est entraînée par le deuxième moteur M2 figuré en pointillé. Elle est formée par une vis sans fin 223 axiale au moteur M2 et entraînant en rotation un pignon de sortie 225, lequel est solidaire en rotation de l'arbre intermédiaire 231.

De façon optionnelle, le pignon de sortie 225 de la transmission bloquante T2 est ici liée en rotation à l'arbre intermédiaire 231 de façon amovible, par exemple par engagement de clavettes axiales montées sur une couronne de déverrouillage 226 qui entoure l'arbre de sortie 215 du motoréducteur MR2. Cette couronne de déverrouillage est ici maintenue engagée par un ressort de poussée axiale. En lui imprimant un mouvement de translation qui l'éloigne du pignon de sortie 225 de transmission bloquante, on obtient un désengagement des clavettes et une désolidarisation entre la transmission commune T3 et la transmission bloquante T2. La transmission commune T3 étant réversible, on obtient ainsi un déverrouillage du frein de stationnement, utilisable par exemple en cas de blocage intempestif ou de défaillance électrique.

Ce déverrouillage est ici réalisable par appui sur une collerette dépassant radialement de la couronne de déverrouillage 226, par exemple par un outil simple pouvant être introduit par un orifice inférieur du ou des boîtier, ou comme ici par une fourchette montée pivotante et dépassant vers l'extérieur sous la forme d'un levier.

Un déverrouillage par rotation externe peut aussi être prévu sur l'arbre du deuxième moteur M2, par exemple par une forme de manoeuvre similaire à la forme de manoeuvre 129 de la Fig.14.

Il est ici appliqué à un frein à disque tout électrique, mais pourrait être modifié inclure aussi un fonctionnement hydraulique, en plus du fonctionnement électrique de maintien de freinage de service et de stationnement, voire en plus du fonctionnement électrique de freinage de service.

Dans un tel mode de réalisation mixte, une pression hydraulique M0 est appliquée de façon connue dans le logement du boîtier 91 qui contient le piston 236 et forme ainsi une chambre hydraulique, que l'on munira de joints d'étanchéité non illustrés ici. Elle y est amenée par une conduite hydraulique 90 illustrée en pointillé.

On notera que le fonctionnement mixte peut être combiné avec les autres types d'actionneurs selon l'invention en prévoyant une chambre hydraulique, par exemple celui de la Fig.14 ou d'autres de la première famille, par exemple en prévoyant un piston hydraulique muni d'un noyau coulissant formant la vis de sortie 115 de la transmission principale T1, de façon similaire à la Fig.15.

La Fig.16 illustre un autre exemple de mode de réalisation de l'invention de la deuxième famille, dont l'actionneur est compatible avec l'exemple de la Fig.12b. Le frein 2' est similaire au frein 1 de la Fig.15, de type tout électrique ou possiblement mixte, et qui ne sera décrit que dans ses différences.

Dans cet exemple la transmission principale réalisée de façon similaire à la transmission bloquante T2, entraînée par un moteur M1 transverse qui et formée par une vis sans fin 213 menant un pignon de sortie 215 mené, ici le même pignon 225 que la sortie de la transmission bloquante.

Bien sûr, l'invention n'est pas limitée aux exemples qui viennent d'être décrits et de nombreux aménagements peuvent être apportés à ces exemples sans sortir du cadre de l'invention, qui n'est limitée que dans le champ d'application des revendications annexées.

### Nomenclature

- M1: premier moteur
- M2: deuxième moteur
- T1: transmission principale
- T2: transmission bloquante
- T3: transmission commune réversible
- R1: rotation dans la transmission principale
- R2: rotation dans la transmission bloquante
- C1: couple dans la transmission principale
- C2: couple dans la transmission bloquante
- D1,D2,D3: déplacement en translation
- F1: effort linéaire de la transmission bloquante
- F2: effort linéaire de la transmission bloquante
- F3: l'effort de serrage
- 1: frein à disque, premier exemple
- 110: butée axiale à billes de la transmission principale
- 111: stator du premier moteur
- 112: rotor du premier moteur
- 113: deuxième arbre, arbre creux formant écrou menant de la transmission principale
- 114: filetage à billes de la transmission principale
- 115: vis menée de la transmission principale, formant piston de frein
- 1150: logement interne au piston de frein
- 1151: blocage en rotation de la transmission principale
- 120: butée axiale de la transmission bloquante
- 121: stator du deuxième moteur
- 122: rotor du deuxième moteur
- 123: premier arbre, entrée de la transmission bloquante
- 124,124': vis menante de la transmission bloquante
- 125,125': écrou mené de la transmission bloquante, formant élément d'appui intermédiaire
- 1250: face d'appui de l'écrou mené de la transmission bloquante
- 1251: blocage en rotation de la transmission bloquante
- 129: forme de manoeuvre de déblocage de la transmission bloquante
- 91: boîtier d'étrier
- 912: couvercle de logement de l'actionneur
- 92: nez d'étrier
- 93: plaquette intérieure
- 94: plaquette extérieure
- 95: disque de frein
- 96: circuit d'alimentation directe de l'actionneur
- 2: frein à disque, deuxième exemple
- 2': frein à disque, variante du deuxième exemple
- 211: stator du premier moteur
- 212: rotor du premier moteur
- 213, 213': arbre/denture d'entrée de la transmission principale
- 214: réducteur à double train épicycloïdal en série, transmission principale
- 215, 215': arbre de sortie et pignon mené de la transmission principale
- 223, 223': vis menante de la transmission bloquante
- 225, 225': pignon mené de la transmission bloquante
- 230: butée axiale de la transmission commune
- 231, 231': arbre intermédiaire menant de la transmission commune
- 232: flasque de butée de la transmission commune
- 234: vis menante de la transmission commune
- 235: écrou de la transmission commune
- 2351: blocage en rotation de l'écrou de la transmission commune
- 236: piston de frein
- 2360: face d'appui extérieure du piston de frein
- 2365: logement intérieur du piston de frein
- 2361: blocage en rotation du piston de frein
- MR1: motoréducteur de transmission principale

## Revendications

1. Dispositif d'actionneur (1, 2), ou servomoteur, pour déplacer en translation (D3) un piston de serrage (115) selon un axe de piston, lequel piston réalise ainsi un appui de serrage,
ledit dispositif comprenant ou recevant un premier entraînement et un deuxième entraînement,
dans lequel le deuxième entraînement est rotatif et est mû par un deuxième moteur (M2), et déplace ledit piston en translation par au moins une transmission dite bloquante (T2), qui inclut au moins deux dentures coopérant ensemble de façon irréversible pour, directement ou indirectement :
- entraîner (F2) en translation (D3) ledit piston dans le sens du serrage lors d'une activation dudit deuxième moteur (M2), et
- bloquer en translation ledit piston en position de serrage lorsque ledit deuxième moteur est désactivé,
le premier entraînement est rotatif et est mû par un premier moteur (M1),
le dispositif comprend en outre une transmission dite principale (T1), qui reçoit le premier entraînement rotatif et qui inclut au moins deux dentures coopérant ensemble de façon réversible pour réaliser, directement ou indirectement, un entraînement (F1) en translation (D3) dudit piston dans le sens du serrage lors d'une activation dudit premier moteur (M1),
ladite transmission principale (T1) est agencée pour fonctionner en parallèle avec la transmission bloquante (T2), et est agencée pour être capable, à elle seule, d'appliquer sur le piston un effort de serrage dit nominal.
**caractérisé en ce que** l'actionneur est agencé pour permettre, après avoir réalisé une mise en appui sous un effort de serrage en activant au moins la transmission principale, de maintenir ledit effort de serrage par l'irréversibilité de la transmission bloquante tout en désactivant ladite transmission principale.

2. Dispositif selon la revendication précédente, **caractérisé en ce que** la transmission principale (T1) est motorisée et agencée pour être capable d'appliquer à elle seule sur le piston un effort de serrage nominal correspondant à l'effort acquis lors de la production d'un effort maximal de serrage pour lequel le dispositif est prévu.

3. Dispositif selon l'une quelconque des revendications précédentes, **caractérisé en ce que** la transmission bloquante (T2) entraîne le piston (115) en translation par l'intermédiaire d'au moins un élément dit de maintien (125), lequel exerce sur le piston un effort en translation dans le sens du serrage et non dans le sens du desserrage, de façon à autoriser un déplacement (D3) du piston dans le sens du serrage sous l'effet de la transmission principale (T1) même en l'absence d'effort de translation de la part de ladite transmission bloquante (T2).

4. Dispositif selon l'une quelconque des revendications précédentes, **caractérisé en ce que** la transmission réversible (T1) et/ou la transmission bloquante (T2) comprend un mécanisme de type vis-écrou (113, 114, 115, respectivement 124, 125).

5. Dispositif selon l'une quelconque des revendications précédentes, **caractérisé en ce que** la transmission bloquante (T2) comprend une transmission par engrenage entre deux dentures rotatives d'axes transverses entre eux, notamment réalisant une réduction de vitesse.

6. Dispositif selon l'une quelconque des revendication 1 à 4, **caractérisé en ce que** la transmission principale (T1) et/ou la transmission bloquante (T2) comprend une transmission réalisant une réduction de vitesse par engrenage entre une denture rotative et une crémaillère en translation.

7. Dispositif selon l'une quelconque des revendications précédentes, **caractérisé en ce que** la caractéristique d'irréversibilité de la transmission bloquante et/ou de réversibilité de la transmission principale est obtenue par une combinaison d'une ou plusieurs caractéristiques parmi :
- angle de dentures engrenant ensemble, déterminé par rapport à un angle limite de frottement,
- couple de matériaux de surface ou de traitement de surface de dentures engrenant ensemble, déterminé par rapport à un angle limite de frottement,
- paramètre de géométrie de denture et/ou d'engrenage, incluant profil et/ou déport et/ou adaptation et/ou entraxe, de dentures engrenant ensemble.

8. Dispositif selon l'une quelconque des revendications précédentes, **caractérisé en ce que** la transmission principale (T1) et la transmission bloquante (T2) sont toutes deux agencées pour recevoir un entraînement rotatif (M1, M2) et produire un effort (F1, F2) en translation (D3).

9. Dispositif selon l'une quelconque des revendications précédentes, **caractérisé en ce que** le piston (115) est bloqué en rotation (1151, 1251) et est agencé pour pouvoir être entraîné en translation :
- par un effort linéaire (F1) issu d'un premier mécanisme vis-écrou (113, 114, 115) formant ou participant à la transmission principale (T1) et agissant sur la périphérie extérieure dudit piston, et
- par un effort linéaire (F2) issu d'un deuxième mécanisme vis-écrou (124, 125), formant ou participant à la transmission bloquante (T2), et disposé à l'intérieur d'un logement (1150) ménagé à l'intérieur du piston et débouchant axialement pour recevoir le deuxième mécanisme vis-écrou.

10. Dispositif selon la revendication précédente, **caractérisé en ce que** le premier mécanisme vis-écrou est du type à transmission par roulement, tandis que le deuxième mécanisme vis-écrou est du type à contact direct.

11. Dispositif selon l'une quelconque des revendications 1 à 7, **caractérisé en ce que** la transmission principale (T1) et la transmission bloquante (T2) sont toutes deux agencées pour recevoir un entraînement rotatif (M1, M2) et produire un effort en rotation (C1, C2) appliqué à un ou plusieurs éléments intermédiaires rotatifs (231), lesquels entraînent le piston (235) en translation (D3) par une transmission dite commune (T3), qui fonctionne de manière réversible.

12. Dispositif selon la revendication précédente, **caractérisé en ce qu'**il comprend :
- un mécanisme d'engrenages à axes parallèles (214) formant ou participant à la transmission principale (T1) et qui entraîne un élément rotatif intermédiaire (215, 231),
- un mécanisme comprenant une denture menante (223) d'axe transverse à l'axe du piston (236), engrenant sur un pignon (225) d'axe parallèle à l'axe de piston et formant ou participant à la transmission bloquante et qui entraîne un élément rotatif intermédiaire (231), et
- un mécanisme vis-écrou (234, 235) coaxial au piston (236) formant la transmission commune (T3), qui est entraînée par le ou les éléments rotatifs intermédiaires (231).

13. Dispositif selon la revendication 11, **caractérisé en ce qu'**il comprend :
- un mécanisme comprenant une denture menante (213') d'axe transverse à l'axe du piston, engrenant sur un pignon d'axe parallèle à l'axe de piston et formant ou participant à la transmission principale (T1) et qui entraîne un élément rotatif intermédiaire (215'), et
- un mécanisme comprenant une denture menante (223') d'axe transverse à l'axe du piston, engrenant sur un pignon d'axe (225') parallèle à l'axe de piston et formant ou participant à la transmission bloquante (T2) et qui entraîne un élément rotatif intermédiaire (225'), et
- un mécanisme vis-écrou coaxial au piston (235) formant la transmission commune (T3), qui est entraîné par le ou les éléments rotatifs intermédiaires (215', 225').

14. Dispositif selon la revendication précédente, **caractérisé en ce que** la denture menante (213') de la transmission principale (T1) et la denture menante (223') de la transmission bloquante (T2) engrènent toutes deux sur un même élément intermédiaire rotatif (225').

15. Dispositif selon l'une quelconque des revendications précédentes, **caractérisé en ce que**
- la transmission principale (T1) entraîne le piston (115, 235) en translation selon une première chaîne cinématique agencée présentant un premier jeu, et
- la transmission bloquante (T2) entraîne le piston (115, 235) en translation selon une deuxième chaîne cinématique agencée pour présenter un deuxième jeu, qui est non nul et supérieur audit premier jeu.

16. Dispositif selon l'une quelconque des revendications précédentes, **caractérisé en ce que** le deuxième moteur (M2) est électrique et agencé pour supporter sans dommage, pendant une durée déterminée ou permanente, un courant d'alimentation résultant d'une activation dudit deuxième moteur dans un cas où sa rotation est ralentie ou bloquée par une résistance mécanique.

17. Dispositif selon l'une quelconque des revendications 15 à 16, **caractérisé en ce qu'**il comprend un circuit d'alimentation (96), dit directe, agencé de sorte que le premier moteur (M1) et le deuxième moteur (M2) sont alimentés par un même circuit (96), ou par des circuits commandés par un même interrupteur ou de façon synchrone.

18. Dispositif selon l'une quelconque des revendications précédentes, **caractérisé en ce qu'**il comprend un circuit d'alimentation dit décalée agencé pour, lors d'une commande d'activation simultanée du premier moteur et du deuxième moteur, le deuxième moteur est activé avec un retard non nul après le premier moteur.

19. Dispositif selon l'une quelconque des revendications précédentes, **caractérisé en ce que** la transmission bloquante présente une partie de manoeuvre (129) qui est agencée pour :
- recevoir un entraînement rotatif extérieur audit dispositif de façon à entraîner ladite transmission bloquante (T2) dans le sens du desserrage, et/ou
- être manoeuvrée de façon manuelle ou par un outil portatif de façon à désengager ladite transmission bloquante (T2) et ainsi autoriser le déplacement du piston (115, 235) dans le sens du desserrage.

20. Frein (1, 2) de véhicule comprenant un dispositif selon l'une quelconque des revendications précédentes, agencé pour actionner ledit frein dans une fonction de frein de stationnement ou de maintien de freinage, en utilisant la transmission principale (T1) pour fournir un effort de serrage de stationnement ;
et en utilisant la transmission bloquante (T2) pour maintenir ledit serrage en l'absence d'alimentation électrique (96), et pour desserrer ledit serrage par alimentation du deuxième moteur (M2) dans le sens du desserrage.

21. Frein (1, 2) selon la revendication précédente, **caractérisé en ce qu'**il fonctionne par serrage d'un disque (95) mobile entre des garnitures de frictions (93, 94),
**en ce qu'**une fonction de freinage de service est réalisée en utilisant la transmission principale (T1), par alimentation électrique du premier moteur (M1) de l'actionneur.

22. Véhicule motorisé ou non motorisé, notamment routier, comprenant au moins un frein actionné par un dispositif selon l'une quelconque des revendications 1 à 19, ou au moins un frein (1, 2) selon l'une quelconque des revendications 20 à 21.

23. Procédé de commande d'un frein (1, 2) selon l'une quelconque des revendications 20 à 21, ou d'un frein actionné par un dispositif selon l'une quelconque des revendications 1 à 19,
**caractérisé en ce qu'**il réalise une fonction de frein de stationnement en mettant en oeuvre les étapes suivantes :
- à réception d'une commande de serrage du frein de stationnement, alimentation du premier moteur (M1) et du deuxième moteur (M2) jusqu'à obtention d'un effort de serrage demandé, déterminé pour satisfaire à une mise en oeuvre en frein de stationnement ;
- désactivation du premier moteur et du deuxième moteur ;
- sans alimentation électrique, maintien d'un effort de serrage de consigne, inférieur ou égal à l'effort de serrage demandé et déterminé pour satisfaire à un maintien de frein de stationnement, par réaction (220, 230) de la transmission bloquante (T2) ;
- à réception d'une commande de desserrage du frein de stationnement, alimentation du deuxième moteur (M2) dans le sens du desserrage.

24. Procédé de commande d'un frein (1, 2) selon l'une quelconque des revendications 20 à 21, ou d'un frein actionné par un dispositif selon l'une quelconque des revendications 1 à 19,
**caractérisé en ce qu'**il réalise une fonction de maintien de freinage, notamment à l'arrêt ou en situation de freinage constant, en mettant en oeuvre les étapes suivantes :
- à réception d'une commande de freinage de service, alimentation au moins du premier moteur (M1) pour fournir un effort de serrage à une valeur de consigne ;
- détection d'une commande de consigne de freinage de service maintenue, pendant une durée supérieure à une valeur déterminée, à une valeur constante, ou invariante dans une plage déterminée, ou supérieure à une valeur déterminée ;
- désactivation du premier moteur (M1) et optionnellement du deuxième moteur ;
- sans alimentation électrique, maintien d'un effort de serrage d'une valeur sensiblement égale à la valeur de consigne maintenue, par réaction de la transmission bloquante (T2) ;
- à réception d'une commande de desserrage du frein de service, alimentation du deuxième moteur (M2) dans le sens du desserrage.

25. Procédé selon la revendication précédente, **caractérisé en ce que** l'actionneur est un dispositif selon l'une quelconque des revendications 3 à 19,
et **en ce que**, à réception d'une commande de freinage de service, l'étape d'alimentation du premier moteur (M1) se fait en maintenant l'élément de maintien (125) de la transmission bloquante (T2) en position desserrée,
et **en ce que** l'étape de désactivation du premier moteur (M1) et du possiblement deuxième moteur (M2) est précédée d'une étape d'activation dudit deuxième moteur (M2) pour amener ledit élément de maintien en position de serrage avec un effort correspondant à la valeur de consigne maintenue.

26. Procédé de fabrication d'un actionneur de frein selon l'une quelconque des revendications 1 à 19, **caractérisé en ce qu'**il comprend les étapes suivantes :
- fabrication d'un élément de transmission dit de base, destiné à former une denture de transmission finie, menante ou menée, par coopération avec une denture de transmission dite complémentaire, au sein de la transmission principale ou de la transmission bloquante de l'actionneur ;
- sélection d'une caractéristique de réversibilité ou non-réversibilité pour ladite denture de transmission finie ;
- en fonction de ladite sélection de caractéristique, sélection et application d'une ou plusieurs opérations de finition prévue pour obtenir ladite denture finie à partir dudit élément de base, ladite opération de finition étant déterminée pour que le couple formé par ladite denture finie et sa denture complémentaire coopèrent ensemble de façon réversible ou non selon ladite sélection de caractéristique.

27. Procédé de fabrication de véhicule, **caractérisé en ce qu'**il comprend un montage d'un ou plusieurs actionneurs de frein selon l'une quelconque des revendications 1 à 19 ou d'un ou plusieurs freins (1, 2) selon l'une quelconque des revendications 20 à 21.

## Patentansprüche

1. Aktuatoranordnung (1, 2) oder Servomotor zur Translationsverlagerung (D3) eines Schließkolbens (115) entlang einer Kolbenachse, wobei der Kolben dadurch eine Schließunterstützung bietet,
wobei die Anordnung einen ersten Antrieb und einen zweiten Antrieb umfasst oder aufnimmt,
wobei der zweite Antrieb drehend ist und von einem zweiten Motor (M2) bewegt wird und den Kolben in Translation durch mindestens ein so genanntes blockierendes Getriebe (T2) verlagert, welches mindestens zwei Zahnungen einschließt, die irreversibel zusammenwirken, um direkt oder indirekt:
- den Kolben in die Richtung des Schließens bei einer Aktivierung des zweiten Motors (M2) in Translation (D3) anzutreiben (F2), und
- den Kolben in Schließposition in Translation zu blockieren, wenn der zweite Motor deaktiviert ist,
wobei der erste Antrieb drehend ist und von einem ersten Motor (M1) bewegt wird,
wobei die Anordnung ferner ein so genanntes Hauptgetriebe (T1) umfasst, das den ersten drehenden Antrieb aufnimmt und das mindestens zwei Zahnungen einschließt, die reversibel zusammenwirken, um direkt oder indirekt einen Antrieb (F1) des Kolbens in Translation (D3) in die Richtung des Schließens bei einer Aktivierung des ersten Motors (M1) zu verwirklichen,
wobei das Hauptgetriebe (T1) dazu vorgesehen ist, parallel mit dem blockierenden Getriebe (T2) zu funktionieren und für sich allein geeignet zu sein, an den Kolben eine so genannte nominale Schließkraft anzulegen,
**dadurch gekennzeichnet, dass** der Aktuator dazu vorgesehen ist, nachdem eine Unterstützung unter einer Schließkraft durch Aktivieren mindestens des Hauptgetriebes verwirklicht wurde, es zu ermöglichen, die Schließkraft durch die Irreversibilität des blockierenden Getriebes zu erhalten, wobei das Hauptgetriebe deaktiviert wird.

2. Anordnung nach dem vorhergehenden Anspruch, **dadurch gekennzeichnet, dass** das Hauptgetriebe (T1) motorgesteuert ist und dazu vorgesehen ist, geeignet zu sein, für sich allein auf den Kolben eine nominale Schließkraft anzulegen, die der Kraft entspricht, die bei der Erzeugung einer maximalen Schließkraft, für die die Anordnung vorgesehen ist, erhalten wird.

3. Anordnung nach einem der vorhergehenden Ansprüche, **dadurch gekennzeichnet, dass** das blockierende Getriebe (T2) den Kolben (115) in Translation über mindestens ein so genanntes Halteelement (125) antreibt, das auf den Kolben eine Translationskraft in Richtung des Schließens und nicht in Richtung des Öffnens ausübt, um eine Verlagerung (D3) des Kolbens in die Richtung des Schließens unter der Wirkung des Hauptgetriebes (T1) auch bei Fehlen einer Translationskraft von Seiten des blockierenden Getriebes (T2) zu gestatten.

4. Anordnung nach einem der vorhergehenden Ansprüche, **dadurch gekennzeichnet, dass** das reversible Getriebe (T1) und/oder das blockierende Getriebe (T2) einen Schraube-Mutter-Mechanismus (113, 114, 115 bzw. 124, 125) umfasst.

5. Anordnung nach einem der vorhergehenden Ansprüche, **dadurch gekennzeichnet, dass** das blockierende Getriebe (T2) ein Getriebe durch Eingreifen zwischen zwei rotierenden Zahnungen mit Querachsen zwischen ihnen umfasst, das insbesondere eine Geschwindigkeitsreduzierung durchführt.

6. Anordnung nach einem der Ansprüche 1 bis 4, **dadurch gekennzeichnet, dass** das Hauptgetriebe (T1) und/oder das blockierende Getriebe (T2) ein Getriebe umfasst, das eine Geschwindigkeitsreduzierung durch Eingreifen zwischen einer rotierenden Zahnung und einer Zahnstange in Translation durchführt.

7. Anordnung nach einem der vorhergehenden Ansprüche, **dadurch gekennzeichnet, dass** das Merkmal der Irreversibilität des blockierenden Getriebes und/oder der Reversibilität des Hauptgetriebes durch eine Kombination eines oder mehrerer der folgenden Merkmale erhalten wird:
- Winkel von ineinandergreifenden Zahnungen, der in Bezug zu einem Grenzreibungswinkel bestimmt wird,
- Paar von Oberflächenmaterialien oder Oberflächenbehandlung von ineinandergreifenden Zahnungen, das in Bezug zu einem Grenzreibungswinkel bestimmt wird,
- Geometrieparameter einer Zahnung und/oder eines Getriebes, einschließlich Profil und/oder Versatz und/oder Adaptation und/oder Achsabstand, von ineinandergreifenden Zahnungen.

8. Anordnung nach einem der vorhergehenden Ansprüche, **dadurch gekennzeichnet, dass** das Hauptgetriebe (T1) und das blockierende Getriebe (T2) beide dazu vorgesehen sind, einen Drehantrieb (M1, M2) aufzunehmen und eine Kraft (F1, F2) in Translation (D3) zu erzeugen.

9. Anordnung nach einem der vorhergehenden Ansprüche, **dadurch gekennzeichnet, dass** der Kolben (115) in Drehung blockiert wird (1151, 1251) und dazu vorgesehen ist, in Translation angetrieben zu werden:
- durch eine lineare Kraft (F1), die von einem ersten Schraube-Mutter-Mechanismus (113, 114, 115) ausgeht, der das Hauptgetriebe (T1) bildet oder an diesem beteiligt ist und auf die äußere Peripherie des Kolbens einwirkt, und
- durch eine lineare Kraft (F2), die von einem zweiten Schraube-Mutter-Mechanismus (124, 125) ausgeht, der das blockierende Getriebe (T2) bildet oder an diesem beteiligt ist und in einer Lagerung (1150) angeordnet ist, die in dem Kolben vorgesehen ist und axial mündet, um den zweiten Schraube-Mutter-Mechanismus aufzunehmen.

10. Anordnung nach dem vorhergehenden Anspruch, **dadurch gekennzeichnet, dass** der erste Schraube-Mutter-Mechanismus vom Typ mit Übertragung durch Wälzlager ist, während der zweite Schraube-Mutter-Mechanismus vom Typ mit direktem Kontakt ist.

11. Anordnung nach einem der Ansprüche 1 bis 7, **dadurch gekennzeichnet, dass** das Hauptgetriebe (T1) und das blockierende Getriebe (T2) beide dazu vorgesehen sind, einen Drehantrieb (M1, M2) aufzunehmen und eine Kraft in Rotation (C1, C2) zu erzeugen, die an ein oder mehrere rotierende Zwischenelemente (231) angelegt wird, die den Kolben (235) in Translation (D3) durch ein so genanntes gemeinsames Getriebe (T3) antreiben, das auf reversible Art und Weise funktioniert.

12. Anordnung nach dem vorhergehenden Anspruch, **dadurch gekennzeichnet, dass** sie umfasst:
- einen Getriebemechanismus mit parallelen Achsen (214), der das Hauptgetriebe (T1) bildet oder an diesem beteiligt ist und ein rotierendes Zwischenelement (215, 231) antreibt,
- einen Mechanismus, umfassend eine Antriebszahnung (223) mit einer Querachse zur Achse des Kolbens (236), der in ein Ritzel (225) mit einer Achse parallel zur Kolbenachse eingreift und das blockierende Getriebe bildet oder an diesem beteiligt ist, und der ein rotierendes Zwischenelement (231) antreibt, und
- einen Schraube-Mutter-Mechanismus (234, 235) koaxial zum Kolben (236), der das gemeinsame Getriebe (T3) bildet, das von dem oder den rotierenden Zwischenelementen (231) angetrieben wird.

13. Anordnung nach Anspruch 11, **dadurch gekennzeichnet, dass** es umfasst:
- einen Mechanismus, umfassend eine Antriebszahnung (213') mit einer Querachse zur Achse des Kolbens, der in ein Ritzel mit einer Achse parallel zur Kolbenachse eingreift und das Hauptgetriebe (T1) bildet oder an diesem beteiligt ist, und der ein rotierendes Zwischenelement (215') antreibt, und
- einen Mechanismus, umfassend eine Antriebszahnung (223') mit einer Querachse zur Achse des Kolbens, der in ein Ritzel mit einer Achse (225') parallel zur Kolbenachse eingreift und das blockierende Getriebe (T2) bildet oder an diesem beteiligt ist, und der ein rotierendes Zwischenelement (225') antreibt, und
- einen Schraube-Mutter-Mechanismus koaxial zum Kolben (235), der das gemeinsame Getriebe (T3) bildet, das von dem oder den rotierenden Zwischenelementen (215', 225') angetrieben wird.

14. Anordnung nach dem vorhergehenden Anspruch, **dadurch gekennzeichnet, dass** die Antriebszahnung (213') des Hauptgetriebes (T1) und die Antriebszahnung (223') des blockierenden Getriebes (T2) beide in ein selbes rotierendes Zwischenelement (225') eingreifen.

15. Anordnung nach einem der vorhergehenden Ansprüche, **dadurch gekennzeichnet, dass**
- das Hauptgetriebe (T1) den Kolben (115, 235) in Translation gemäß einer ersten kinematischen Kette, die dazu vorgesehen ist, ein erstes Spiel aufzuweisen, antreibt, und
- das blockierende Getriebe (T2) den Koben (115, 235) in Translation gemäß einer zweiten kinematischen Kette, die dazu vorgesehen ist, ein zweites Spiel, das ungleich Null und größer als das erste Spiel ist, aufzuweisen.

16. Anordnung nach einem der vorhergehenden Ansprüche, **dadurch gekennzeichnet, dass** der zweite Motor (M2) elektrisch ist und dazu vorgesehen ist, während einer bestimmten Dauer oder permanent ohne Schaden einen Versorgungsstrom auszuhalten, der sich aus einer Aktivierung des zweiten Motors ergibt, falls seine Drehung durch einen mechanischen Widerstand verlangsamt oder blockiert wird.

17. Anordnung nach einem der Ansprüche 15 bis 16, **dadurch gekennzeichnet, dass** sie eine so genannte direkte Versorgungsschaltung (96) umfasst, die dazu vorgesehen ist, dass der erste Motor (M1) und der zweite Motor (M2) von einer selben Schaltung (96) oder von Schaltungen, die von einem selben Schalter oder synchron gesteuert werden, versorgt werden.

18. Anordnung nach einem der vorhergehenden Ansprüche, **dadurch gekennzeichnet**, das sie eine so genannte versetzte Versorgungsschaltung umfasst, die dazu vorgesehen ist, dass bei einer gleichzeitigen Aktivierungssteuerung des ersten Motors und des zweiten Motors der zweite Motor mit einer Verzögerung ungleich Null nach dem ersten Motor aktiviert wird.

19. Anordnung nach einem der vorhergehenden Ansprüche, **dadurch gekennzeichnet, dass** das blockierende Getriebe ein Betätigungsteil (129) aufweist, das dazu vorgesehen ist:
- einen Drehantrieb außerhalb der Anordnung aufzunehmen, um das blockierende Getriebe (T2) in die Richtung des Öffnens anzutreiben, und/oder
- manuell oder durch ein tragbares Werkzeug betätigt zu werden, um das blockierende Getriebe (T2) auszuschalten und so die Verlagerung des Kolbens (115, 235) in die Richtung des Öffnens zu gestatten.

20. Fahrzeugbremse (1, 2), umfassend eine Anordnung nach einem der vorhergehenden Ansprüche, die dazu vorgesehen ist, die Bremse in einer Feststellbremsfunktion oder Dauerbremsfunktion zu betätigen, wobei das Hauptgetriebe (T1) verwendet wird, um eine Feststellschließkraft zu liefern;
und wobei das blockierende Getriebe (T2) verwendet wird, um das Schließen bei fehlender Stromversorgung (96) aufrechtzuerhalten, und um das Schließen durch Versorgung des zweiten Motors (M2) in die Richtung des Öffnens zu lösen.

21. Bremse (1, 2) nach dem vorhergehenden Anspruch, **dadurch gekennzeichnet, dass** sie durch Einspannen einer beweglichen Scheibe (95) zwischen Reibbelägen (93, 94) funktioniert,
und dass eine Betriebsbremsfunktion unter Verwendung des Hauptgetriebes (T1) durch Stromversorgung des ersten Motors (M1) des Aktuators verwirklicht wird.

22. Motorfahrzeug oder motorloses Fahrzeug, insbesondere Straßenfahrzeug, umfassend mindestens eine Bremse, die durch eine Anordnung nach einem der Ansprüche 1 bis 19 betätigt wird, oder mindestens eine Bremse (1, 2) nach einem der Ansprüche 20 bis 21.

23. Verfahren zur Steuerung einer Bremse (1, 2) nach einem der Ansprüche 20 bis 21 oder einer Bremse, die durch eine Anordnung nach einem der Ansprüche 1 bis 19 betätigt wird,
**dadurch gekennzeichnet, dass** es eine Feststellbremsfunktion verwirklicht, wobei die folgenden Schritte eingesetzt werden:
- bei Empfang einer Steuerung zum Schließen der Feststellbremse Versorgung des ersten Motors (M1) und des zweiten Motors (M2) bis zum Erhalt einer angeforderten Schließkraft, die so bestimmt ist, dass sie einem Einsatz als Feststellbremse gerecht wird;
- Deaktivierung des ersten Motors und des zweiten Motors;
- ohne Stromversorgung Aufrechterhaltung einer Sollschließkraft, die kleiner oder gleich der angeforderten Schließkraft und so bestimmt ist, dass sie einer Aufrechterhaltung als Feststellbremse gerecht wird, durch Reaktion (220, 230) des blockierenden Getriebes (T2);
- bei Empfang einer Steuerung zum Lösen der Feststellbremse Versorgung des zweiten Motors (M2) in die Richtung des Lösens.

24. Verfahren zur Steuerung einer Bremse (1, 2) nach einem der Ansprüche 20 bis 21 oder einer Bremse, die durch eine Anordnung nach einem der Ansprüche 1 bis 19 betätigt wird,
**dadurch gekennzeichnet, dass** es eine Dauerbremsfunktion, insbesondere beim Anhalten oder in einer Dauerbremssituation, verwirklicht, wobei die folgenden Schritte eingesetzt werden:
- bei Empfang einer Betriebsbremssteuerung Versorgung mindestens des ersten Motors (M1), um eine Schließkraft mit einem Sollwert zu liefern;
- Erfassung einer Steuerung eines Betriebsbremssollwerts, die während einer Dauer über einem bestimmten Wert, über einem konstanten Wert oder einer in einem bestimmten Bereich invariablen Dauer oder einer Dauer über einem bestimmten Wert aufrechterhalten wird;
- Deaktivierung des ersten Motors (M1) und optional des zweiten Motors;
- ohne Stromversorgung Aufrechterhaltung einer Schließkraft mit einem Wert im Wesentlichen gleich dem aufrechterhaltenen Sollwert durch Reaktion des blockierenden Getriebes (T2);
- bei Empfang einer Steuerung zum Lösen der Betriebsbremse Versorgung des zweiten Motors (M2) in die Richtung des Lösens.

25. Verfahren nach dem vorhergehenden Anspruch, **dadurch gekennzeichnet, dass** der Aktuator eine Anordnung nach einem der Ansprüche 3 bis 19 ist,
und dass bei Empfang einer Betriebsbremssteuerung der Schritt der Versorgung des ersten Motors (M1) erfolgt, wobei das Halteelement (125) des blockierenden Getriebes (T2) in gelöster Position gehalten wird,
und dass vor dem Schritt der Deaktivierung des ersten Motors (M1) und des möglichen zweiten Motors (M2) ein Schritt der Aktivierung des zweiten Motors (M2) erfolgt, um das Halteelement in Schließposition mit einer Kraft entsprechend dem aufrechterhaltenen Sollwert zu bringen.

26. Verfahren zur Herstellung eines Bremsaktuators nach einem der Ansprüche 1 bis 19, **dadurch gekennzeichnet, dass** es die folgenden Schritte umfasst:
- Herstellung eines so genannten Basisgetriebeelements, das dazu bestimmt ist, eine antreibende oder angetriebene bearbeitete Übertragungszahnung durch Zusammenwirken mit einer so genannten komplementären Übertragungszahnung innerhalb des Hauptgetriebes oder des blockierenden Getriebes des Aktuators zu bilden;
- Auswahl eines Merkmals der Reversibilität oder Irreversibilität für die bearbeitete Übertragungszahnung;
- je nach Auswahl eines Merkmals Auswahl und Anwendung eines oder mehrerer Bearbeitungsvorgänge, die dazu vorgesehen ist, die bearbeitete Zahnung aus dem Basiselement zu erhalten, wobei Endbearbeitung so bestimmt wird, dass das Paar, das von der bearbeiteten Zahnung und ihrer komplementären Zahnung gebildet wird, reversibel oder nicht reversibel je nach Auswahl eines Merkmals zusammenwirkt.

27. Verfahren zur Herstellung eines Fahrzeugs, **dadurch gekennzeichnet, dass** es eine Montage eines oder mehrerer Bremsaktuatoren nach einem der Ansprüche 1 bis 19 oder einer oder mehrerer Bremsen (1, 2) nach einem der Ansprüche 20 bis 21 umfasst.

## Claims

1. Actuator device (1, 2), or servomotor, for displacing a clamping piston (115) in translation (D3) along a piston axis, said piston thus producing a clamping pressure,
said device comprising or receiving a first drive and a second drive,
in which the second drive is rotary and is driven by a second motor (M2), and displaces said piston in translation by means of at least one transmission called locking transmission (T2), which includes at least two toothings cooperating together in irreversible fashion, for directly or indirectly:
- driving (F2) said piston in translation (D3) in the clamping direction during an actuation of said second motor (M2), and
- locking said piston in translation in clamping position when said second motor is deactivated,
the first drive is rotary and is driven by a first motor (M1),
the device also comprises a transmission called main transmission (T1), which receives the first rotary drive and which includes at least two toothings cooperating together in reversible fashion for producing, directly or indirectly, a drive (F1) of said piston in translation (D3) in the clamping direction during an activation of said first motor (M1),
said main transmission (T1) is arranged to operate in parallel with the locking transmission (T2), and is arranged to be capable, on its own, of applying a clamping force, called nominal clamping force, on the piston,
**characterized in that** the actuator is arranged to make it possible, after having produced abutment under a clamping force by actuating at least the main transmission, to maintain said clamping force by the irreversibility of the locking transmission while deactivating said main transmission.

2. Device according to the preceding claim, **characterized in that** the main transmission (T1) is motor-driven and arranged to be capable of applying on its own a nominal clamping force on the piston corresponding to the force acquired during the production of a maximum clamping force for which the device is designed.

3. Device according to any one of the preceding claims, **characterized in that** the locking transmission (T2) drives the piston (115) in translation via at least one element called maintaining element (125), which exerts a force in translation on the piston in the clamping direction and not in the release direction, so as to allow a displacement (D3) of the piston in the clamping direction under the effect of the main transmission (T1) even in the absence of translational force on the part of said locking transmission (T2).

4. Device according to any one of the preceding claims, **characterized in that** the reversible transmission (T1) and/or the locking transmission (T2) comprises a mechanism of the screw and nut type (113, 114, 115, respectively 124, 125).

5. Device according to any one of the preceding claims, **characterized in that** the locking transmission (T2) comprises a transmission by meshing between two rotary toothings with axes transverse to one another, in particular producing a speed reduction.

6. Device according to any one of claims 1 to 4, **characterized in that** the main transmission (T1) and/or the locking transmission (T2) comprises a transmission producing a speed reduction by meshing between a rotary toothing and a rack in translation.

7. Device according to any one of the preceding claims, **characterized in that** the characteristic of irreversibility of the locking transmission and/or of reversibility of the main transmission is obtained by a combination of one or more characteristics from:
- angle of toothings meshing together, determined with respect to a friction limit angle,
- pair of surface or surface treatment materials of toothings meshing together, determined with respect to a friction limit angle,
- toothing geometry and/or meshing parameter, including profile and/or addendum modification and/or adaptation and/or centre distance, of toothings meshing together.

8. Device according to any one of the preceding claims, **characterized in that** the main transmission (T1) and the locking transmission (T2) are both arranged to receive a rotary drive (M1, M2) and to produce a force (F1, F2) in translation (D3).

9. Device according to any one of the preceding claims, **characterized in that** the piston (115) is locked in rotation (1151, 1251) and is arranged to be capable of being driven in translation:
- by a linear force (F1) originating from a first screw and nut mechanism (113, 114, 115) forming or participating in the main transmission (T1) and acting on the outer periphery of said piston, and
- by a linear force (F2) originating from a second screw and nut mechanism (124, 125) forming or participating in the locking transmission (T2) and placed inside a housing (1150) arranged inside the piston and opening axially to receive the second screw and nut mechanism.

10. Device according to the preceding claim, **characterized in that** the first screw and nut mechanism is of the roller transmission type, while the second screw and nut mechanism is of the direct contact type.

11. Device according to any one of claims 1 to 7, **characterized in that** the main transmission (T1) and the locking transmission (T2) are both arranged to receive a rotary drive (M1, M2) and to produce a force in rotation (C1, C2) applied to one or more intermediate rotary elements (231) which drive the piston (235) in translation (D3) by a transmission called common transmission (T3), which operates in reversible fashion.

12. Device according to the preceding claim, **characterized in that** it comprises:
- a gear mechanism with parallel axes (214) forming or participating in the main transmission (T1) and which drives an intermediate rotary element (215, 231),
- a mechanism comprising a driving toothing (223) of axis transverse to the axis of the piston (236), meshing with a pinion (225) of axis parallel to the piston axis and forming or participating in the locking transmission and which drives an intermediate rotary element (231), and
- a screw and nut mechanism (234, 235) coaxial with the piston (236) forming the common transmission (T3), which is driven by the intermediate rotary element(s) (231).

13. Device according to claim 11, **characterized in that** it comprises:
- a mechanism comprising a driving toothing (213') of axis transverse to the axis of the piston, meshing with a pinion of axis parallel to the piston axis and forming or participating in the main transmission (T1) and which drives an intermediate rotary element (215'), and
- a mechanism comprising a driving toothing (223') of axis transverse to the axis of the piston, meshing with a pinion of axis (225') parallel to the piston axis and forming or participating in the locking transmission (T2) and which drives an intermediate rotary element (225'), and
- a screw and nut mechanism coaxial with the piston (235), forming the common transmission (T3), which is driven by the intermediate rotary element(s) (215', 225').

14. Device according to the preceding claim, **characterized in that** the driving toothing (213') of the main transmission (T1) and the driving toothing (223') of the locking transmission (T2) both mesh with one and the same intermediate rotary element (225').

15. Device according to any one of the preceding claims, **characterized in that**:
- the main transmission (T1) drives the piston (115, 235) in translation according to a first kinematic chain arranged having a first gap, and
- the locking transmission (T2) drives the piston (115, 235) in translation according to a second kinematic chain arranged to have a second gap, which is non-zero and greater than said first gap.

16. Device according to any one of the preceding claims, **characterized in that** the second motor (M2) is electric and arranged to withstand without damage, for a determined duration or permanently, a supply current resulting from an actuation of said second motor in the event that its rotation is slowed or locked by a mechanical resistance.

17. Device according to any one of claims 15 to 16, **characterized in that** it comprises a supply circuit (96), called direct supply circuit, arranged so that the first motor (M1) and the second motor (M2) are powered by one and the same circuit (96), or by circuits controlled by one and the same switch or synchronously.

18. Device according to any one of the preceding claims, **characterized in that** it comprises a supply circuit called staggered supply circuit, arranged so that in the event of a simultaneous activation command of the first motor and the second motor, the second motor is activated with a non-zero delay after the first motor.

19. Device according to any one of the preceding claims, **characterized in that** the locking transmission has an operating part (129) that is arranged in order to:
- receive a rotary drive external to said device so as to drive said locking transmission (T2) in the release direction, and/or
- be operated manually or by a hand-held tool so as to disengage said locking transmission (T2) and thus make it possible for the piston (115, 235) to be displaced in the release direction.

20. Vehicle brake (1, 2) comprising a device according to any one of the preceding claims, arranged to actuate said brake in a function as parking brake or for maintaining braking, by using the main transmission (T1) to provide a clamping force for parking;
and by using the locking transmission (T2) for maintaining said clamping in the absence of electrical power (96), and for releasing said clamping by powering the second motor (M2) in the release direction.

21. Brake (1, 2) according to the preceding claim, **characterized in that** it operates by clamping a mobile disk (95) between brake pads (93, 94),
and **in that** a service brake function is performed by using the main transmission (T1) by supplying power to the first motor (M1) of the actuator.

22. Vehicle, motor-driven or not motor-driven, in particular a road vehicle, comprising at least one brake actuated by a device according to any one of claims 1 to 19, or at least one brake (1, 2) according to any one of claims 20 to 21.

23. Method for controlling a brake (1, 2) according to any one of claims 20 to 21, or a brake actuated by a device according to any one of claims 1 to 19,
**characterized in that** it carries out a parking brake function by implementing the following steps:
- on receiving a parking brake clamping command, powering the first motor (M1) and the second motor (M2) until a required clamping force is obtained, determined in order to satisfy an implementation as a parking brake;
- deactivation of the first motor and of the second motor;
- without electrical power, maintaining a set clamping force, less than or equal to the required clamping force and determined to satisfy maintenance of the parking brake, by reaction (220, 230) of the locking transmission (T2);
- on receiving a parking brake release command, powering the second motor (M2) in the release direction.

24. Method for controlling a brake (1, 2) according to any one of claims 20 to 21, or a brake actuated by a device according to any one of claims 1 to 19,
**characterized in that** it carries out a function of maintaining braking, in particular when stationary or in a situation of constant braking, by implementing the following steps:
- on receiving a service braking command, powering at least the first motor (M1) to provide a clamping force at a set value;
- detecting a set service braking command maintained, for a duration greater than a determined value, at a value that is constant or invariant within a determined range, or greater than a determined value;
- deactivating the first motor (M1) and optionally the second motor;
- without electrical power, maintaining a clamping force with a value substantially equal to the set value maintained, by reaction of the locking transmission (T2);
- on receiving a service brake release command, powering the second motor (M2) in the release direction.

25. Method according to the preceding claim, **characterized in that** the actuator is a device according to any one of claims 3 to 19,
and **in that**, on receiving a service braking command, the step of powering the first motor (M1) is carried out by keeping the maintaining element (125) of the locking transmission (T2) in release position,
and **in that** the step of deactivating the first motor (M1) and possibly the second motor (M2) is preceded by a step of activating said second motor (M2) to bring said maintaining element into clamping position with a force corresponding to the set value maintained.

26. Method for manufacturing a brake actuator according to any one of claims 1 to 19, **characterized in that** it comprises the following steps:
- manufacturing a transmission element called base transmission element, intended to form a finished driving or driven transmission toothing, by cooperation with a transmission toothing called complementary transmission toothing, within the main transmission or the locking transmission of the actuator;
- selecting a characteristic of reversibility or non-reversibility for said finished transmission toothing;
- as a function of said characteristic selection, selecting and applying one or more finishing operations intended to obtain said finished toothing starting from said base element, said finishing operation being determined so that the pair formed by said finished toothing and its complementary toothing cooperate together reversibly or not according to said characteristic selection.

27. Method for manufacturing a vehicle, **characterized in that** it comprises an assembly of one or more brake actuators according to any one of claims 1 to 19 or of one or more brakes (1, 2) according to any one of claims 20 to 21.
